# EUROPEAN PATENT SPECIFICATION

(11) **EP 4 646 011 B1**
(45) Date of publication and mention of the grant of the patent: **30.09.2026**
(21) Application number: 23910498.7
(22) Date of filing: 25.12.2023
(51) Int. Cl.: H04W 4/38, H04W 76/10, H04L 67/141, H04B 17/382

(54) **SENSING CHANNEL ESTABLISHMENT METHOD AND APPARATUS**
ERFASSUNGSKANALHERSTELLUNGSVERFAHREN UND -VORRICHTUNG
PROCÉDÉ ET APPAREIL D'ÉTABLISSEMENT DE CANAL DE DÉTECTION

(30) Priority: 30.12.2022 CN 202211737910
(43) Date of publication of application: 05.11.2025
(73) Proprietor: Vivo Mobile Communication Co., Ltd., Dongguan, Guangdong 523863 (CN)
(72) Inventor: CHENG, Sihan, Dongguan, Guangdong 523863 (CN); CHONG, Weiwei, Dongguan, Guangdong 523863 (CN)
(74) Representative: Shieldmark
(86) International application number: PCT/CN2023/141557
(87) International publication number: WO 2024/140572

(56) References cited:
- WO-A1-2021/174884
- CN-A- 108 684 073
- CN-A- 113 473 560
- CN-A- 113 543 233
- CN-A- 114 071 790
- US-A1- 2022 174 625
- "3rd Generation Partnership Project; Technical Specification Group TSG SA; Feasibility Study on Integrated Sensing and Communication (Release 19)", no. V0.3.0, 2 December 2022 (2022-12-02), pages 1 - 72, XP052234514, Retrieved from the Internet <URL:https://ftp.3gpp.org/Specs/archive/22_series/22.837/22837-030.zip TR-22837-030-cl.docx> [retrieved on 20221202]

## Description

### TECHNICAL FIELD

This application pertains to the field of communication technologies, and specifically relates to a sensing channel establishment method and apparatus.

### BACKGROUND

Integrated sensing and communication (Integrated Sensing and Communication, ISAC) has the potential to integrate wireless sensing into large-scale mobile networks to obtain perceptive mobile networks (Perceptive Mobile Networks, PMNs). The PMN may evolve from the current 5G mobile network, and is expected to become a ubiquitous wireless sensor network to provide stable and high-quality mobile communication services.

If a communication channel in the related technologies is applied to the communication sensing system, sensing services cannot be implemented, further reducing quality of communication services.

US 2022/0174625 discloses 5G Core procedures for establishing service-specific PDU sessions, especially for TSN time-domain synchronization. A UE sends a NAS message with S-NSSAI, DNN and PDU Session ID to the AMF, which forwards these to the SMF. The resulting PDU session carries TSN synchronization messages.

### SUMMARY

Embodiments of this application provide a sensing channel establishment method and apparatus, which can solve the problem that when a communication channel in the related technologies is applied to the communication sensing system, sensing services cannot be implemented, further reducing quality of communication services.

According to a first aspect, a sensing channel establishment method is provided, where the method includes:
receiving, by a first network element, a first message from a second network element, where the first message includes related information of a sensing device; and
sending, by the first network element, first information based on the first message, where the first information is used to indicate related information of a protocol data unit (Protocol Data Unit, PDU) session expected by the first network element to the sensing device, the first network element includes a network element with a function of providing sensing services, and the PDU session indicated by the first information is used for establishing a sensing connection and/or executing the sensing service.

According to a second aspect, a sensing channel establishment method is provided, where the method includes:
obtaining, by a sensing device, first information, where the first information is used to indicate related information of a PDU session expected by a first network element, the first network element includes a network element with a function of providing sensing services, and the PDU session indicated by the first information is used for establishing a sensing connection and/or executing the sensing service; and
establishing, by the sensing device, a first PDU session based on the first information, where the first PDU session matches the PDU session expected by the first network element.

According to a third aspect, a sensing channel establishment method is provided, where the method includes:
sending, by a second network element, a first message to a first network element, where the first message includes related information of a sensing device; the first message is used for triggering transmission of first information; the first information is used to indicate, to the sensing device, related information of a PDU session expected by the first network element; the first network element includes a network element with a function of providing sensing services; and the PDU session indicated by the first information is used for establishing a sensing connection and/or executing the sensing service.

According to a fourth aspect, a sensing channel establishment apparatus is provided, where the apparatus includes:
a first receiving module, configured to receive a first message from a second network element, where the first message includes related information of a sensing device;
a first sending module, configured to send first information based on the first message, where the first information is used to indicate related information of a PDU session expected by the first network element to the sensing device, the first network element includes a network element with a function of providing sensing services, and the PDU session indicated by the first information is used for establishing a sensing connection and/or executing the sensing service.

According to a fifth aspect, a sensing channel establishment apparatus is provided, where the apparatus includes:
a first obtaining module, configured to obtain first information, where the first information is used to indicate related information of a PDU session expected by a first network element, the first network element includes a network element with a function of providing sensing services, and the PDU session indicated by the first information is used for establishing a sensing connection and/or executing the sensing service; and
a PDU session establishment module, configured to establish a first PDU session based on the first information, where the first PDU session matches the PDU session expected by the first network element.

According to a sixth aspect, a sensing channel establishment apparatus is provided, where the apparatus includes:
a second sending module, configured to send a first message to a first network element, where the first message includes related information of a sensing device; the first message is used for triggering transmission of first information; the first information is used to indicate, to the sensing device, related information of a PDU session expected by the first network element; the first network element includes a network element with a function of providing sensing services; and the PDU session indicated by the first information is used for establishing a sensing connection and/or executing the sensing service.

According to a seventh aspect, a first network element is provided, where the first network element includes a processor and a memory, where a program or instructions capable of running on the processor are stored in the memory. When the program or the instructions are executed by the processor, the steps of the method according to the first aspect are implemented.

According to an eighth aspect, a first network element is provided, including a processor and a communication interface, where the communication interface is configured to:
receive a first message from a second network element, where the first message includes related information of a sensing device; and
send first information based on the first message, where the first information is used to indicate related information of a PDU session expected by the first network element to the sensing device, the first network element includes a network element with a function of providing sensing services, and the PDU session indicated by the first information is used for establishing a sensing connection and/or executing the sensing service.

According to a ninth aspect, a sensing device is provided, where the sensing device includes a processor and a memory, a program or instructions capable of running on the processor are stored in the memory, and when the program or the instructions are executed by the processor, the steps of the method according to the second aspect are implemented.

According to a tenth aspect, a sensing device is provided, including a processor and a communication interface, where the communication interface is configured to: obtain first information, where the first information is used to indicate related information of a PDU session expected by a first network element, the first network element includes a network element with a function of providing sensing services, and the PDU session indicated by the first information is used for establishing a sensing connection and/or executing the sensing service; and
the processor is configured to establish a first PDU session based on the first information, where the first PDU session matches the PDU session expected by the first network element.

According to an eleventh aspect, a second network element is provided, where the second network element includes a processor and a memory, where a program or instructions capable of running on the processor are stored in the memory. When the program or the instructions are executed by the processor, the steps of the method according to the third aspect are implemented.

According to a twelfth aspect, a second network element is provided, including a processor and a communication interface, where the communication interface is configured to send a first message to a first network element, where the first message includes related information of a sensing device; the first message is used for triggering transmission of first information; the first information is used to indicate, to a sensing device, related information of a PDU session expected by the first network element; the first network element includes a network element with a function of providing sensing services; and the PDU session indicated by the first information is used for establishing a sensing connection and/or executing the sensing service.

According to a thirteenth aspect, a sensing channel establishment system is provided, including a first network element, a sensing device, and a second network element, where the first network element can be configured to execute the steps of the sensing channel establishment method according to the first aspect, the sensing device can be configured to execute the steps of the sensing channel establishment method according to the second aspect, and the second network element can be configured to execute the steps of the sensing channel establishment method according to the third aspect.

According to a fourteenth aspect, a readable storage medium is provided, where the readable storage medium stores a program or instructions, and when the program or instructions are executed by the processor, the steps of the method according to the first aspect are implemented, or the steps of the method according to the second aspect are implemented, or the steps of the method according to the third aspect are implemented.

According to a fifteenth aspect, a chip is provided, where the chip includes a processor and a communication interface, the communication interface is coupled to the processor, and the processor is configured to run a program or instructions to implement the method according to the first aspect, or the method according to the second aspect, or the method according to the third aspect.

According to a sixteenth aspect, a computer program/program product is provided, where the computer program/program product is stored in a storage medium, and the computer program/program product is executed by at least one processor to implement the method according to the first aspect, or the method according to the second aspect, or the method according to the third aspect.

In the embodiments of this application, the first network element with the function of providing the sensing service obtains the related information of the sensing device, and then indicates the related information of the PDU session expected by the first network element to the sensing device, so as to establish the sensing connection and/or execute the sensing service, thereby improving quality of the communication service.

### BRIEF DESCRIPTION OF DRAWINGS

FIG. 1 is a block diagram of a wireless communication system to which the embodiments of this application are applicable;
FIG. 2 is a first schematic flowchart of a sensing channel establishment method according to an embodiment of this application;
FIG. 3 is a second schematic flowchart of a sensing channel establishment method according to an embodiment of this application;
FIG. 4 is a third schematic flowchart of a sensing channel establishment method according to an embodiment of this application;
FIG. 5 is a first schematic flowchart of a procedure of a sensing channel establishment method according to an embodiment of this application;
FIG. 6 is a second schematic flowchart of a procedure of a sensing channel establishment method according to an embodiment of this application;
FIG. 7 is a first schematic structural diagram of a sensing channel establishment apparatus according to an embodiment of this application;
FIG. 8 is a second schematic structural diagram of a sensing channel establishment apparatus according to an embodiment of this application;
FIG. 9 is a third schematic structural diagram of a sensing channel establishment apparatus according to an embodiment of this application;
FIG. 10 is a schematic structural diagram of a communication device according to an embodiment of this application;
FIG. 11 is a schematic diagram of a hardware structure of a first network element according to an embodiment of this application;
FIG. 12 is a schematic diagram of a hardware structure of a terminal sensing device implementing an embodiment of this application; and
FIG. 13 is a schematic diagram of a hardware structure of a second network element for implementing an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. Based on the embodiments in this application, all other embodiments obtained by ordinary people in this field belong to the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

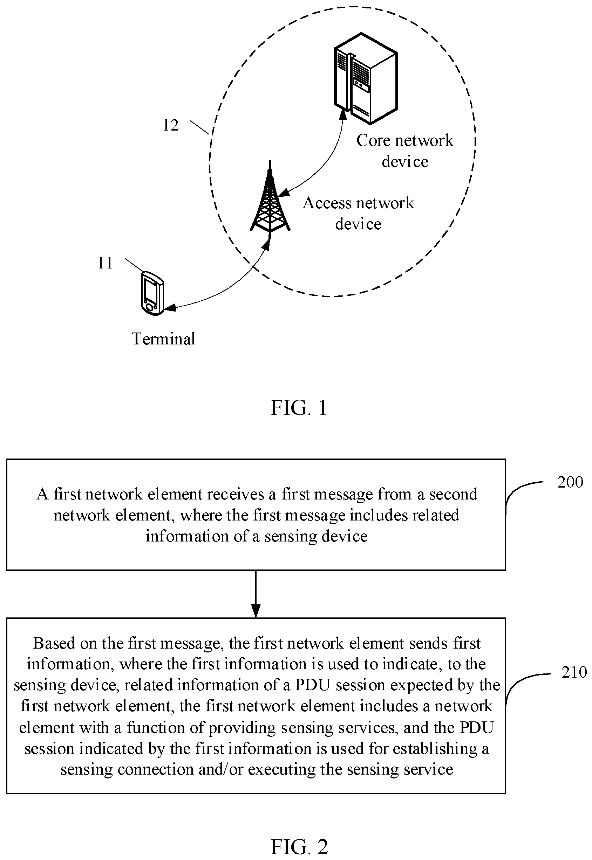

FIG. 1 illustrates a block diagram of a wireless communication system to which an embodiment of this application can be applied. The wireless communication system includes a terminal 11 and a network-side device 12. The terminal 11 may be a terminal-side device such as a mobile phone, a tablet computer (Tablet Personal Computer), a laptop computer (Laptop Computer), a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

The following contents are first introduced:
(1) Integrated sensing and communication/communication-sensing integration:
   There are many commonalities between wireless communication and radar sensing (Communication & Sensing, C&S) in terms of signal processing algorithms, devices, and, to some extent, system architecture.

Research on technologies related to the coexistence of communication and radar systems focuses on developing effective interference management techniques to allow two separately deployed systems to operate smoothly without interfering with each other. Although radar and communication systems might be located in the same place or even physically integrated, they transmit different signals in the time/frequency domain. Through cooperation, they share the same resources to minimize interference with each other during simultaneous operations. Corresponding measures include beamforming, cooperative spectrum sharing, primary-secondary spectrum sharing, dynamic coexistence, and the like. However, effective interference cancellation typically imposes strict requirements on node mobility and information exchange between nodes, which limits significant improvements in spectral efficiency. Since interference in coexistence systems is caused by transmitting two independent signals, a potential solution is to consider using a single transmission signal for both communication and radar sensing simultaneously. Radar systems generally use specially designed waveforms, such as short pulses and chirps, to achieve high power radiation and simplify receiver processing. However, these waveforms are not mandatory for radar detection; passive radar or passive sensing, which uses different radio signals as sensing signals, is a good example.

Machine learning, especially the deep learning technology, further enhances the potential for non-dedicated radio signals to be used for radar sensing. With these technologies, traditional radar is evolving towards more general wireless sensing. Here, wireless sensing broadly refers to retrieving information from received radio signals, rather than modulating communication data onto the signals on the transmitter. For wireless sensing related to a location of a sensing target, dynamic parameters such as reflection delay, angle of arrival (AOA), angle of departure (AOD), and Doppler of target signals can be estimated by using a common signal processing method. Physical characteristics of the sensing target can be implemented by measuring natural mode signals of devices, objects, and living things. The two sensing manners can be referred to as sensing parameter estimation and pattern recognition. In this sense, wireless sensing refers to a more generalized sensing technology and application using radio signals.

Integrated sensing and communication has the potential to integrate wireless sensing into large-scale mobile networks, evolving into what is known as perceptive mobile networks. The PMN may evolve from the current 5G mobile network, and is expected to become a ubiquitous wireless sensor network to provide stable and high-quality mobile communication services. This can be built upon the existing mobile network infrastructure without requiring substantial changes to the network structure and equipment. It maximizes the capabilities of mobile networks and avoids high infrastructure costs of constructing new wide-area wireless sensing networks. As coverage expands, integrated communication and sensing capabilities are anticipated to enable many new applications. Perceptive mobile networks are capable of offering communication and wireless sensing services simultaneously and, due to their large broadband coverage and robust infrastructure, have the potential to become a ubiquitous wireless sensing solution. Their coordinated communication and sensing capabilities will enhance social productivity and foster a multitude of new applications that current sensor networks cannot effectively realize. Early work using mobile signals for passive sensing has already demonstrated its potential, such as using global system for mobile communications (Global System for Mobile Communications, GSM) radio signals for traffic monitoring, weather forecasting, and rainfall remote sensing. Perceptive mobile networks can be widely utilized in communication and sensing applications across transportation, communication, energy, precision agriculture, and security, where existing solutions are either unfeasible or inefficient. They can also complement existing sensor networks with distinctive day-and-night operational capabilities and the ability to penetrate fog, foliage, and even solid objects.

There are no specific processes for communication-sensing integration in related technologies, so user equipments (User Equipment, UE) and networks cannot conduct interactive communication channels related to communication-sensing services.

The following specifically describes the sensing channel establishment method and apparatus provided in the embodiments of this application through specific embodiments and application scenarios thereof with reference to the accompanying drawings.

FIG. 2 is a first schematic flowchart of a sensing channel establishment method according to an embodiment of this application. As shown in FIG. 2, the method includes the following steps.

Step 200: A first network element receives a first message from a second network element, where the first message includes related information of a sensing device.

Optionally, the first network element may be a network element with a function of providing sensing services.

Optionally, the first network element may be a sensing function (Sensing Function, SF).

Optionally, the sensing device may include sensing UE, which may be simply referred to as UE or a terminal.

Optionally, the sensing device may include sensing UE and a RAN serving the sensing UE.

Optionally, the sensing device may include a sensing RAN.

Optionally, the embodiments of this application may use the sensing device being the UE as an example, and other devices that can be used as sensing devices can be similarly applied to the embodiments of this application.

Optionally, the second network element may be a network element responsible for a mobility management function.

Optionally, the second network element may be an AMF.

Optionally, the second network element may be a core network element.

Optionally, the second network element may send the first message to the first network element to indicate the related information of the sensing device to the first network element.

Optionally, the first network element may receive the first message sent by the second network element, and then learn about the related information of the sensing device based on the first message, so as to learn that the sensing device needs to establish a sensing connection.

Step 210: Based on the first message, the first network element sends first information, where the first information is used to indicate, to the sensing device, related information of a PDU session expected by the first network element, the first network element includes a network element with a function of providing sensing services, and the PDU session indicated by the first information is used for establishing a sensing connection and/or executing the sensing service.

Optionally, after obtaining the related information of the sensing device, the first network element may send the first information to the sensing device, so as to inform the sensing device how to establish a PDU session.

Optionally, after receiving the first message sent by the second network element, the first network element may feed back related information of the first network element and related information of a PDU session preferred by the first network element to the sensing device.

Optionally, after receiving the first information, the sensing device may learn, based on the first information, the related information of the PDU session expected by the first network element.

Optionally, after obtaining the related information of the PDU session expected by the first network element, the sensing device may establish a PDU session expected by the first network element, based on the related information of the PDU session expected by the first network element.

Optionally, the PDU session indicated by the first information may refer to establishing a sensing connection and/or executing the sensing service based on a user plane (User plane, UP) manner.

In an embodiment, using the sensing device being UE, the first network element being an SF, and the second network element being an AMF as an example, after the SF receives a first message sent by the AMF, the SF may feed back information about the SF and information about a PDU session preferred by the SF to the UE through first information, including parameters for establishing the PDU session, such as at least one of a data network name (Data Network Name, DNN), single network slice selection assistance information (Single Network Slice Selection Assistance information, S-NSSAI), and an address of the SF.

Optionally, the first information may include indication information for transmitting the sensing service using a PDU session, which is used to indicate that the requested sensing service needs to be completed using the PDU session. The indication information for the sensing service may include a sensing configuration or a sensing measurement result feedback.

For example, the sensing configuration may include a sensing configuration or sensing service description sent by the SF to the UE.

For example, the sensing measurement result feedback may include the UE sending a sensing measurement result to the SF.

Optionally, any indication information that can indicate the sensing service may be carried in the first information, which is not limited by this embodiment of this application.

Optionally, before sending of the first information, the second network element may alternatively determine to transmit sensing service information in PDU session manner, based on at least one factor, such as local policy, control plane load, user plane load, sensing capability information of the sensing device, requirement information of the sensing service, and a transmission delay requirement.

In the embodiments of this application, the first network element with the function of providing the sensing service obtains the related information of the sensing device, and then indicates the related information of the PDU session expected by the first network element to the sensing device, so as to establish the sensing connection and/or execute the sensing service, thereby improving quality of the communication service.

Optionally, the method further includes:
receiving, by the first network element, second information, where the second information is used to indicate that the sensing device has established a first PDU session; where
the first PDU session matches the PDU session expected by the first network element.

Optionally, the first network element may receive the second information.

Optionally, the first network element may receive the second information from the sensing device.

Optionally, the second information may be sent after the sensing device establishes the first PDU session.

Optionally, the second information may include information indicating that the sensing device has established the first PDU session.

Optionally, the second information may include information indicating that the sensing device has determined the first PDU session.

Optionally, the second information may include the sensing capability information of the sensing device.

Optionally, the sensing device may send the second information.

Optionally, the sensing device may create or determine the first PDU session based on the related information of the PDU session expected by the first network element in the first information, and the first PDU session matches the PDU session expected by the first network element.

Optionally, after the first PDU session is established or determined, the sensing device may send the second information to the first network element through a NAS message or an NRSP (next generation sensing protocol, where the next generation sensing protocol is not an established protocol and represents a communication sensing information transfer protocol) protocol, and the first network element may receive the second information and determine based on the second information that the sensing device has established the first PDU session. During creating or determining of the first PDU session, the sensing device can create or determine the first PDU session based on the first information from the first network element, so that the first PDU session matches the PDU session expected by the first network element. Matching means that parameter information of the first PDU session is the same as parameter information of the PDU session expected by the first network element, and the parameter information of the PDU session is similar to the related information of the PDU session. For example, during creating or determining of the first PDU session, the sensing device refers to the related information of the PDU session expected by the first network element to create or determine the first PDU session. Specifically, the sensing device refers to slice information, data network name information, radio access type (radio access type, RAT), access type information, and the like of the PDU session expected by the first network element, so as to create the first PDU session or determine the existing PDU session as the first PDU session.

In an embodiment, using the sensing device being the UE, the first network element being the SF, and the second network element being the AMF as an example, after establishing the first PDU session, the UE may send, to the SF through the first PDU session or through a NAS message, session establishment success information, also carrying sensing capability information.

In an embodiment, using the sensing device being the UE, the first network element being the SF, and the second network element being the AMF as an example, the UE sends, to the SF through the PDU session, a PDU session establishment success message and/or the sensing capability information of the UE.

Specifically, the UE determines the address of the SF based on received information such as the Internet protocol address (Internet Protocol Address, IP address) and/or fully qualified domain name (Fully Qualified Domain Name, FQDN) of the SF, and sends an establishment success message to the SF to inform the SF that the PDU session is successfully established.

Optionally, the UE may alternatively send the capability information of the UE to the SF, so as to register the sensing capability of the UE on the SF, which can help the SF to select UE for performing the sensing service in the future.

Optionally, the second information may alternatively be transmitted through the NRSP.

Optionally, the receiving, by a first network element a first message from a second network element includes:
receiving, by the first network element, a first message sent by a second network element after selection of the first network element based on first request information, where the first request information is used to trigger the sensing service.

Optionally, the first network element may receive the first message.

Optionally, the first network element may receive the first message from the second network element.

Optionally, the first message is sent by the second network element after selection of the first network element based on the first request information.

Optionally, the second network element may receive the first request information.

Optionally, the first request information may include a request from other network elements, such as a service request for a sensing service.

Optionally, the first request information may include a request of the UE, such as a registration request.

Optionally, after receiving the first request information, the second network element may select the first network element based on the first request information.

Optionally, the second network element may select the first network element based on capability information and location information of the sensing device, load information and capability information of the first network element, and the like. Such information may be obtained from the sensing device through the registration step of the sensing device before. The second network element can query network elements in the NRF to select an appropriate first network element, for example, selecting, based on capability information and location information of the sensing device, a first network element satisfying such information. That is, the capability information of the first network element may cover the capability information of the sensing device, and the area that the first network element can handle may also cover the location information of the sensing device, and then a final appropriate first network element can be selected based on the load information and capability information of the first network element.

Optionally, after selecting the first network element, the second network element may send the first message to the first network element, and the first network element may receive the first message.

In an embodiment, using the first network element being SF and the second network element being the AMF as an example, the AMF may send a first message to the SF, where the first message may be a request message for requesting to obtain related information for establishing a PDU session.

In an embodiment, using the sensing device being the UE, the first network element being the SF, and the second network element being the AMF as an example, the AMF may send a first message to the SF, where the first message may be a request message, which includes identification information of the sensing UE and requests to obtain related information for establishing a PDU session, for example, requesting to obtain the identification information of the SF, slice information of the PDU session, and the like.

In an embodiment, using the sensing device being the UE, the first network element being the SF, and the second network element being the AMF as an example, the AMF may select the SF and prepare to request the SF for related information for establishing a PDU session. Before that, the AMF may trigger this step based on a request of other network elements (such as a service request for the sensing service) or a request of the UE (such as a registration request).

Optionally, the request of other network elements or the request of the UE may be first request information.

In an embodiment, using the sensing device being the UE, the first network element being the SF, and the second network element being the AMF as an example, the AMF may select the SF based on capability information and location information of the UE, load information and capability information of the SF, and the like. This information may be obtained previously through a registration procedure of the UE, or by querying network elements in the NRF to select an appropriate SF. The AMF can query network elements in the NRF to select an appropriate SF, for example, selecting, based on capability information and location information of the UE, a SF satisfying such information. That is, the capability information of the SF may cover the capability information of the UE, and the area that the SF can handle may also cover the location information of the UE, and then a final appropriate first network element can be selected based on the load information and capability information of the SF.

Optionally, the first message is used to request the related information of the PDU session.

Optionally, after receiving the first message, the first network element may determine that there is a sensing device requesting to establish a sensing channel or a sensing connection.

Optionally, after receiving the first message, the first network element may determine that there is a sensing device requesting to establish a PDU session for establishing a sensing connection and/or performing the sensing service.

Optionally, the related information of the PDU session may include identification information of the first network element or slice information.

Optionally, the first message includes at least one of the following:
identification information of the sensing device;
IP address information of the sensing device; and
first indication information, where the first indication information indicates that the first message is used for requesting related information of a PDU session.

Optionally, the identification information of the sensing device may be used to identify the sensing device.

Optionally, the identification information of the sensing device may be used to uniquely identify the sensing device.

Optionally, the identification information of the sensing device may be a temporarily generated sensing device identifier or a long-term or permanent sensing device identifier.

Optionally, the identification information of the sensing device may be a temporary identifier generated by the second network element or an identifier dedicated to establishing the sensing connection and/or executing the sensing service.

Optionally, the IP address information of the sensing device may be used to indicate the IP address of the sensing device; a sensing device can be found based on the IP address information, and information can be transmitted with the sensing device.

Optionally, the first indication information may be used to indicate that the first message is a request for obtaining related information for establishing a PDU session.

Optionally, the first indication information may be used to request identification information, slice, DNN information, and the like of the first network element.

Optionally, after receiving the first message, the first network element can determine an identity and/or location of the sensing device based on the identification information of the sensing device in the first message.

Optionally, after receiving the first message, the first network element can determine based on the identification information of the sensing device in the first message that a sensing device requests to establish a sensing connection and/or perform the sensing service, or requests to establish a PDU session.

Optionally, after receiving the first message, the first network element can find a sensing device based on the IP address information of the sensing device in the first message, and transmit information with the sensing device.

In an embodiment, using the sensing device being the UE, the first network element being the SF, and the second network element being the AMF as an example, the AMF may generate a temporary UE identifier, and the SF may determine specific UE based on the UE identifier, or perform information transmission with the UE based on the information of the UE identifier through the AMF.

In an embodiment, using the sensing device being the UE and the first network element being the SF as an example, the SF may directly send network element information of the SF and related information of the PDU session to the UE based on IP address information of the UE.

Optionally, before the receiving, by a first network element a first message from a second network element, the method further includes:
receiving, by the first network element, second request information, where the second request information is used to trigger the sensing service; and
sending, by the first network element, third request information to the second network element based on the second request information, where the third request information is used for requesting to obtain identification information of a sensing device capable of providing sensing services.

The receiving, by a first network element a first message from a second network element includes:
receiving, by the first network element, the first message that is sent by the second network element after selection of the first network element based on the third request information.

Optionally, the first network element may receive the second request information.

Optionally, the first network element may receive second request information sent by other software, applications, or other network elements.

Optionally, after receiving the second request information sent by other software, applications or other network elements, the first network element may learn that there is a sensing device requesting to establish a sensing connection and/or perform the sensing service, or requesting to establish a PDU session.

Optionally, after receiving the second request information, the first network element may send the third request information to the second network element.

Optionally, the second network element may receive the third request information.

Optionally, the third request information may include an indication message requesting to obtain information about a sensing device with a sensing capability, and is used to indicate requesting to obtain information about the sensing device with the sensing capability.

In an embodiment, using the sensing device being the UE, the first network element being the SF, and the second network element being the AMF as an example, the SF may receive a request (the second request information) for the sensing service sent by network elements such as other software, applications, or other SFs, and trigger a request procedure to the AMF.

In an embodiment, using the sensing device being the UE, the first network element being the SF, and the second network element being the AMF as an example, the SF sends third request information to the AMF, requesting to obtain information about the UE, where the UE may be UE performing a sensing task, and the AMF selects an appropriate sensing device and feeds it back to the SF. Selection of the sensing device may be based on the capability information and location information of the sensing device, load information and capability information of the SF, and the like.

Optionally, the third request information further includes at least one of the following:
description information of the sensing service, where the description information is used for indicating the sensing task; and
requirement information of the sensing service, where the requirement information is used to indicate a requirement of the sensing task.

Optionally, the description information of the sensing service is used to indicate a sensing service to be executed, and require the target sensing device to support the sensing service.

Optionally, the requirement information of the sensing service is used to indicate a requirement of a sensing service to be executed, and require the target sensing device to meet the requirement of the sensing service.

Optionally, after receiving the second request information sent by other software, applications, or other network elements, the first network element may learn that there is a sensing device requesting to establish a sensing connection and/or perform the sensing service, or requesting to establish a PDU session; and may also learn about description information and/or requirement information of the sensing service requested by the sensing device to generate and send third request information to the second network element.

Optionally, the first information includes at least one of the following:
identification information of the first network element;
identification information of the sensing device;
IP address information of the sensing device;
second indication information, where the second indication information is used to indicate that the PDU session is used to establish a sensing connection and/or perform the sensing service; and
related information of the PDU session expected by the first network element.

Optionally, the identification information of the first network element may be used to indicate a specific first network element.

Optionally, the sensing device can find a first network element based on the identification information of the first network element, and transmit information with the first network element.

Optionally, the identification information of the first network element may be an IP address, a MAC address, and the like of the first network element, or FQDN information of the first network element.

Optionally, the identification information of the sensing device may be used to identify the sensing device, and a sensing device can be uniquely determined based on this information.

Optionally, the identification information of the sensing device may be a temporarily generated sensing device identifier or a long-term or permanent sensing device identifier.

Optionally, the IP address information of the sensing device may be used to indicate the IP address of the sensing device; a sensing device can be found based on the IP address information, and information can be transmitted with the sensing device.

In an embodiment, using the sensing device being the UE, the first network element being the SF, and the second network element being the AMF as an example, the AMF may generate a temporary UE identifier, and the SF may determine specific UE based on the UE identifier, or perform information transmission with the UE based on the information of the UE identifier through the AMF.

In an embodiment, using the sensing device being the UE and the first network element being the SF as an example, the SF may directly send network element information of the SF and related information of the PDU session to the UE based on IP address information of the UE.

Optionally, the related information of the PDU session expected by the first network element includes at least one of the following:
slice information expected by the first network element;
data network name information expected by the first network element;
RAT type information expected by the first network element;
access type (Access Type) information expected by the first network element; and
security-related information expected by the first network element.

Optionally, the slice information expected by the first network element may be used to indicate to establish a PDU session.

Optionally, the data network name information expected by the first network element may be used to indicate to establish a PDU session.

Optionally, the RAT type information expected by the first network element may be used to indicate to establish a PDU session.

Optionally, the access type (Access Type) information expected by the first network element may be used to indicate to establish a PDU session.

Optionally, the security-related information expected by the first network element may be used to establish a secure tunnel, or encrypt data to ensure security and privacy of the data.

Optionally, the security-related information expected by the first network element may be a security certificate, an encryption key, or the like.

Optionally, the slice information expected by the first network element can be understood as slice information of the PDU session expected by the first network element.

Optionally, the data network name information expected by the first network element can be understood as data network name information of the PDU session expected by the first network element.

Optionally, the RAT type information expected by the first network element can be understood as RAT type information of the PDU session expected by the first network element.

Optionally, the access type (Access Type) information expected by the first network element can be understood as access type (Access Type) information of the PDU session expected by the first network element.

In an embodiment, using the sensing device being the UE, the first network element being the SF, and the second network element being the AMF as an example, the AMF may receive a request from other network elements (such as a service request for a sensing service) (such as first request information) or a request from the UE (such as a registration request), select an SF, and prepare to request the SF for related information for establishing a PDU session, that is, send a first message to the SF. After receiving the first message sent by the AMF, the SF can feed back first information to the UE, which may include related information of the SF and information about a preferred PDU session, including parameters for establishing a PDU session, such as at least one of data network name information, slice information, and an SF address.

In an embodiment, using the sensing device being the UE, the first network element being the SF, and the second network element being the AMF as an example, for example, the SF may receive a sensing service request (second request information) sent by network elements such as other software or applications or other SFs, the SF may send third request information to the AMF, requesting to obtain information about the UE, where the UE may be UE for performing a sensing task, and the AMF selects an appropriate sensing device to feed it back to the SF through a first message. After receiving the first message sent by the AMF, the SF can feed back first information to the UE, which may include related information of the SF and information about a preferred PDU session, including parameters for establishing a PDU session, such as at least one of data network name information, slice information, and an SF address.

Optionally, the sending first information includes at least one of the following:
sending, by the first network element, the first information to the sensing device through the second network element; and
directly sending, by the first network element, the first information to the sensing device.

Optionally, the first network element may send the first information to the second network element.

Optionally, after receiving the first information from the first network element, the second network element may send the first information to the sensing device.

Optionally, the sensing device may receive the first information from the second network element.

Optionally, the sensing device may receive the first information from the first network element through a non-access stratum (Non Access Stratum, NAS) signaling procedure of the second network element.

Optionally, the first network element may send the first information to the sensing device through the NRSP protocol.

Optionally, the sensing device may receive the first information from the first network element through the NRSP protocol.

Optionally, the first network element may send the first information to the sensing device through other possible protocols.

Optionally, the sensing device may receive the first information from the first network element through other possible protocols.

In an embodiment, using the sensing device being the UE, the first network element being the SF, and the second network element being the AMF as an example, the SF delivers UP Info through the AMF, that is, the SF needs to deliver the message to the AMF, and then the AMF sends it to the UE. A UE ID is used to help the AMF find the UE and forward the information to the UE. For example, it is transmitted through a Namf_Communication_N1N2MessageTransfer message.

In an embodiment, using the sensing device being the UE, the first network element being the SF, and the second network element being the AMF as an example, the SF transfers UP Info through the NRSP protocol, that is, the SF can directly transfer the message to the UE through the NRSP protocol. The IP address information of the UE may be used to find the UE, so as to send the information to the UE.

Optionally, the second information includes at least one of the following:
third indication information, where the third indication information is used to indicate that the sensing device has a sensing capability;
fourth indication information, where the fourth indication information indicates that the first PDU session has been established;
IP address information of the first PDU session; and
related information of the sensing capability of the sensing device.

Optionally, the IP address information of the first PDU session may be used to indicate which PDU session (session) it is. The IP address information of the first PDU session may alternatively be implicitly expressed, for example, being determined based on sent information such as the IP address.

Optionally, the related information of the sensing capability of the sensing device may include sensing capability indication information for indicating that the UE is UE with a sensing capability.

Optionally, the sensing capability indication information may also be used to indicate specific sensing capabilities of the UE, which, for example, may include at least one of the following: sensing measurement mode, sensing service, sensing purpose, sensing measurement signal, and sensing measurement accuracy.

Optionally, the sensing measurement mode can include at least one of the following modes: the UE performs transmission and reception by itself (the UE may perform sensing measurement), other UEs perform transmission and this UE performs reception (the UE can perform sensing measurement), the base station performs transmission and the UE performs reception (the UE can perform sensing measurement), the UE performs transmission and the base station performs reception (the UE can send sensing signals, and may or may not perform sensing measurement), and the base station performs transmission and the base station performs reception. "Transmission" means sending measurement signals, and "reception" means receiving measurement signals and performing measurement.

Optionally, the sensing service may include or be used to indicate at least one of the following:
large sensing range with high real-time requirements (Delay Critical LSS);
large sensing range with low real-time requirements (LSS);
small sensing range with low real-time requirements (Delay Critical SSS); and
small sensing range with low real-time requirements (SSS).

Optionally, the sensing service may include a digital index, letter index, or letter alias or abbreviation of the above services, or other string indexes, or other string aliases or abbreviations.

Optionally, the sensing purpose may include one or more applications requiring sensing services supported by the sensing device, such as breathing monitoring or surrounding traffic environment monitoring, which are not limited by the embodiments of this application.

Optionally, the sensing measurement signal can indicate the sensing capability supported by the sensing device (capability of performing transmission, or reception, or both), and the signal used for sensing measurement.

Optionally, the sensing measurement quantity may include at least one of the following: RSRP, RSRQ, multipath arrival angle, multipath departure angle, multipath delay, and Doppler frequency.

Optionally, the sensing measurement accuracy may include at least one of the following: sensing resolution and sensing error.

Optionally, the first network element receiving the second information includes at least one of the following:
receiving, by the first network element, the second information from the sensing device; and
receiving, by the first network element, the second information from the sensing device through the second network element.

Optionally, the first network element may receive the second information sent by the sensing device, and determine based on the second information that the sensing device has established the first PDU session.

Optionally, the first network element may receive the second information sent by the sensing device through the PDU session.

Optionally, the sensing device may determine the address of the first network element based on information such as the IP address or FQDN of the first network element.

Optionally, after determining the address of the first network element, the sensing device may send the second information to the first network element.

Optionally, the first network element may receive the second information sent by the sensing device and forwarded by the second network element, and determine based on the second information that the sensing device has established the first PDU session.

Optionally, after determining the address of the first network element, the sensing device may send the second information to the second network element, and the second information includes the address of the first network element.

Optionally, after receiving the second information, the second network element may send the second information to the first network element based on the address of the first network element.

In an embodiment, using the sensing device being the UE, the first network element being the SF, and the second network element being the AMF as an example, the UE sends, to the SF through the PDU session, a PDU session establishment success message and/or the sensing capability information of the UE.

Optionally, the UE can determine the address of the SF based on received information such as the IP address/FQDN of the SF, and send an establishment success message to the SF to inform the SF that the PDU session has been successfully established. The UE may alternatively send the capability information of the UE to the SF, so as to register the sensing capability of the UE on the SF, which can help the SF to select UE for performing the sensing service in the future, where the message may be transferred through NRSP.

In an embodiment, using the sensing device being the UE, the first network element being the SF, and the second network element being the AMF as an example, the UE sends, to the SF through the AMF, a PDU session establishment success message. The message is used to inform the SF that the UE has established a PDU session, and then the SF can send messages to the UE through the PDU session, such as sensing service. Specifically, the UE determines the SF based on obtained identification information such as the address or FQND of the SF, and sends a PDU establishment success message to the AMF. After receiving the message, the AMF sends the message to the SF based on the SF identification information, where the message may be transferred through a Namf_Communication _N1N2MessageTransfer message.

Optionally, after the receiving, by the first network element, second information, the method further includes:
sending, by the first network element, third information to the second network element, where the third information is used to indicate at least one of the following:
the first PDU session has been established;
parameter information of the first PDU session;
identification information of the sensing device;
IP address information of the sensing device; and
identification information of the first network element.

Optionally, the first network element may send the third information.

Optionally, the first network element may send the third information to the second network element.

Optionally, the third information may be sent by the first network element after the second information is received.

Optionally, the second network element may receive the third information.

Optionally, after receiving the third information, the second network element may store the third information.

Optionally, the second network element may bind the third information with context information of the sensing device.

Optionally, the parameter information of the first PDU session may be IP address information of the PDU session, which is used to indicate which PDU session it is.

Optionally, the identification information of the sensing device may be used to identify the sensing device.

Optionally, the identification information of the sensing device may be a temporarily generated sensing device identifier or a long-term sensing device identifier.

Optionally, the IP address information of the sensing device may be used to indicate the IP address of the sensing device; a sensing device can be found based on the IP address information, and information can be transmitted with the sensing device.

Optionally, the identification information of the first network element may be used to indicate a specific first network element.

Optionally, the identification information of the first network element may be the IP address of the SF or the FQDN information of the SF.

Optionally, after receiving the third information, the second network element may determine that the first PDU session has been established, and obtain at least one of the parameter information of the first PDU session, the identification information of the sensing device, and the IP address information of the sensing device.

Optionally, after receiving the third information, the second network element may store the related parameters of the PDU session.

In an embodiment, using the sensing device being the UE, the first network element being the SF, and the second network element being the AMF as an example, the SF may send result information of PDU session establishment to the AMF, informing the AMF of a PDU session establishment result and related parameters. The AMF can store parameters related to the PDU session and bind them to context information of the UE, so that when the SF needs to be switched due to movement of the UE in the future, related context can also be changed without losing information.

In an embodiment, using the sensing device being the UE, the first network element being the SF, and the second network element being the AMF as an example, the AMF may generate a temporary UE identifier, and the SF may determine specific UE based on the UE identifier, or perform information transmission with the UE based on the information of the UE identifier through the AMF.

In an embodiment, using the sensing device being the UE and the first network element being the SF as an example, the SF may directly send network element information of the SF and related information of the PDU session to the UE based on IP address information of the UE.

Optionally, the parameter information of the first PDU session includes at least one of the following:
IP address information of the first PDU session;
slice information of the first PDU session;
data network name information of the first PDU session;
RAT type information of the first PDU session; and
access type (Access Type) information of the first PDU session.

Optionally, the IP address information of the first PDU session may be used to indicate which PDU session it is. The IP address information of the first PDU session may alternatively be implicitly expressed, for example, being determined based on sent information such as the IP address.

Optionally, the slice information of the first PDU session may be used to indicate to establish a PDU session.

Optionally, the data network name information of the first PDU session may be used to indicate to establish a PDU session.

Optionally, the RAT type information of the first PDU session may be used to indicate to establish a PDU session.

Optionally, the access type (Access Type) information of the first PDU session may be used to indicate to establish a PDU session.

Optionally, the slice information of the first PDU session may match the slice information expected by the first network element.

Optionally, the data network name information of the first PDU session may match the data network name information expected by the first network element.

Optionally, the RAT type information of the first PDU session may match the RAT type information expected by the first network element.

Optionally, the access type (Access Type) information of the first PDU session may match the access type (Access Type) information expected by the first network element.

Optionally, after the receiving, by the first network element, second information, the method further includes:
sending, by the first network element, sensing measurement configuration information to the sensing device, where the sensing measurement configuration information is used to indicate sensing measurement and/or is used to indicate start of executing the sensing service. Optionally, before the first network element sends the sensing measurement configuration information to the sensing device, the first network element may obtain a sensing service request from the second network element or the sensing device.

Optionally, the first network element may send the sensing measurement configuration information.

Optionally, the first network element may send the sensing measurement configuration information to the sensing device.

Optionally, the sensing measurement configuration information may be sent by the first network element after the second information is received.

Optionally, the sensing device may receive the sensing measurement configuration information.

Optionally, the sensing device may perform sensing measurement after receiving the sensing measurement configuration information.

Optionally, the sensing measurement information may include at least one of a sensing service correlation ID (Sensing service correlation ID), sensing service description (sensing service description) information, and a sensing device identifier.

Optionally, the sensing configuration information may include a sensing resource, a quality of service (Quality of Service, QoS) profile (bandwidth configuration, priority configuration, precision configuration, and the like) of a configured sensing service, a trigger condition for the configured sensing service, reporting information, and the like.

Optionally, the sensing configuration information may include at least one of sensing UE configuration information and sensing RAN configuration information.

Optionally, the sensing service correlation ID may be used to identify one sensing service session.

Optionally, the sensing service correlation ID may be assigned by the first network element.

Optionally, the identifier of the sensing device may be used to indicate a device participating in sensing signal measurement.

Optionally, the sensing device may include sensing UE and/or a sensing RAN. The identifier of the sensing device may include at least one of a sensing RAN ID and a sensing UE ID.

Optionally, the sensing service description information may include policy and control information formulated by the first network element for the sensing service description information, for example, it may include at least one of the following: sensing measurement mode, sensing service, sensing purpose, sensing measurement signal, and sensing measurement accuracy.

Optionally, the sensing measurement mode can include at least one of the following modes: the UE performs transmission and reception by itself (the UE may perform sensing measurement), other UEs perform transmission and this UE performs reception (the UE can perform sensing measurement), the base station performs transmission and the UE performs reception (the UE can perform sensing measurement), the UE performs transmission and the base station performs reception (the UE can send sensing signals, and may or may not perform sensing measurement), and the base station performs transmission and the base station performs reception. "Transmission" means sending measurement signals, and "reception" means receiving measurement signals and performing measurement.

Optionally, the sensing service may include or be used to indicate at least one of the following:
large sensing range with high real-time requirements (Delay Critical LSS);
large sensing range with low real-time requirements (LSS);
small sensing range with low real-time requirements (Delay Critical SSS); and
small sensing range with low real-time requirements (SSS).

Optionally, the sensing service may include a digital index, letter index, or letter alias or abbreviation of the above services, or other string indexes, or other string aliases or abbreviations.

Optionally, the sensing purpose may include one or more applications requiring sensing services supported by the sensing device, such as breathing monitoring or surrounding traffic environment monitoring, which are not limited by the embodiments of this application.

Optionally, the sensing measurement signal can indicate the sensing capability supported by the sensing device (capability of performing transmission, or reception, or both), and the signal used for sensing measurement.

Optionally, the sensing measurement quantity may include at least one of the following: RSRP, RSRQ, multipath arrival angle, multipath departure angle, multipath delay, and Doppler frequency.

Optionally, the sensing measurement signal may include a specific required sensing measurement quantity (such as RSRP, RSRQ, multipath arrival angle, multipath departure angle, multipath delay, and Doppler frequency).

Optionally, the sensing measurement accuracy may include at least one of the following: sensing resolution and sensing error.

In an embodiment, using the sensing device being the UE and the first network element being the SF as an example, the SF sends the sensing configuration information to the UE, and the UE performs sensing measurement.

Optionally, the SF may send the sensing measurement configuration information to the UE through the established sensing channel.

In an embodiment, using the first network element being the SF and the second network element being the AMF as an example, the SF can call the sensing configuration transfer service of the AMF, which includes the sensing measurement configuration information.

In an embodiment, using the sensing device being the UE and/or RAN as an example, the UE and/or the RAN performs sensing measurement. The UE and the RAN may perform sensing measurement based on the received sensing configuration information.

Optionally, the method further includes:
receiving, by the first network element, a sensing measurement result from the sensing device.

Optionally, the first network element may receive the sensing measurement result.

Optionally, the first network element may receive the sensing measurement result from the sensing device.

Optionally, the sensing device may perform sensing measurement after receiving the sensing measurement configuration information.

Optionally, the sensing measurement result may be sent by the sensing device after sensing measurement.

Optionally, the sensing measurement result may include a sensing measurement signal or a sensing measurement quantity.

Optionally, the sensing device may send the sensing measurement result.

Optionally, the sensing device may send the sensing measurement result to the first network element through the sensing session, and the first network element may receive the sensing measurement result.

In an embodiment, using the sensing device being the UE and the first network element being the SF as an example, the UE sends a UE sensing measurement result to the SF through the sensing session. The sensing result may be a sensing measurement signal and a sensing measurement quantity.

In an embodiment, using the sensing device being the UE and the first network element being the SF as an example, the SF sends sensing configuration information to the UE, and the UE performs sensing measurement and feeds back a result to the SF.

Optionally, the SF may send the sensing measurement configuration information to the UE through the established sensing channel.

In the embodiments of this application, the first network element with the function of providing the sensing service obtains the related information of the sensing device, and then indicates the related information of the PDU session expected by the first network element to the sensing device, so as to establish the sensing connection and/or execute the sensing service, thereby improving quality of the communication service.

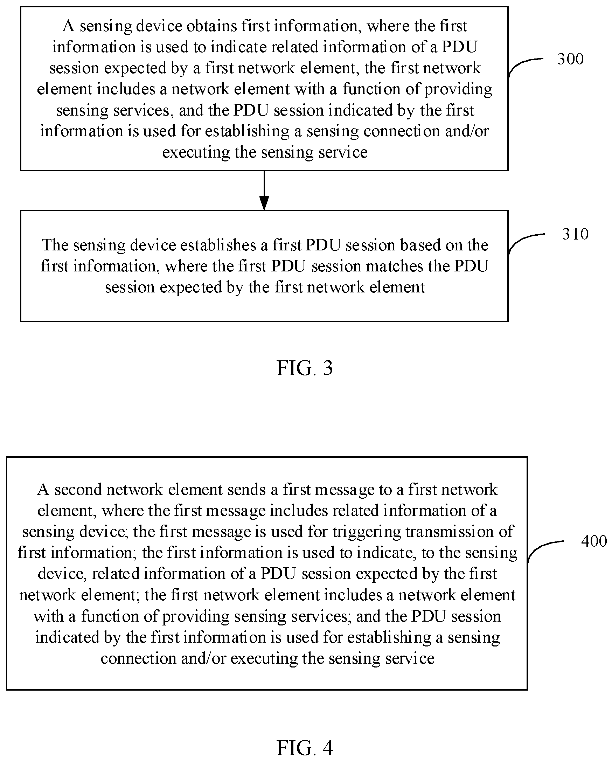

FIG. 3 is a second schematic flowchart of a sensing channel establishment method according to an embodiment of this application. As shown in FIG. 3, the method includes the following steps.

Step 300: A sensing device obtains first information, where the first information is used to indicate related information of a PDU session expected by a first network element, the first network element includes a network element with a function of providing sensing services, and the PDU session indicated by the first information is used for establishing a sensing connection and/or executing the sensing service.

Optionally, the sensing device may include sensing UE.

Optionally, the sensing device may include sensing UE and a RAN serving the sensing UE.

Optionally, the sensing device may include a sensing RAN.

Optionally, the embodiments of this application may use the sensing device being the UE as an example, and other devices that can be used as sensing devices can be similarly applied to the embodiments of this application.

Optionally, the first network element may be a network element with a function of providing sensing services.

Optionally, the first network element may be an SF.

Optionally, the PDU session indicated by the first information may refer to establishing a sensing connection and/or executing the sensing service based on a user plane (User plane, UP) manner.

Optionally, the sensing device may receive the first information sent by the first network element.

Optionally, after receiving the first information, the sensing device may learn, based on the first information, the related information of the PDU session expected by the first network element.

Optionally, after obtaining the related information of the PDU session expected by the first network element, the sensing device may establish a PDU session expected by the first network element, based on the related information of the PDU session expected by the first network element.

Optionally, the first information may include indication information for transmitting the sensing service using a PDU session, which is used to indicate that the requested sensing service needs to be completed using the PDU session. The indication information for the sensing service may include a sensing configuration or a sensing measurement result feedback.

For example, the sensing configuration may include a sensing configuration or sensing service description sent by the SF to the UE.

For example, the sensing measurement result feedback may include the UE sending a sensing measurement result to the SF.

Optionally, any indication information that can indicate the sensing service may be carried in the first information, which is not limited by this embodiment of this application.

Step 310: The sensing device establishes a first PDU session based on the first information, where the first PDU session matches the PDU session expected by the first network element.

Optionally, based on the first information, the sensing device may learn about the related information of the PDU session expected by the first network element, and then can determine, based on the related information of the PDU session expected by the first network element, a PDU session that meets the expectation of the first network element, so as to establish a sensing connection and/or execute the sensing service.

In this embodiment of this application, the first network element with the function of providing the sensing service obtains the related information of the sensing device, and then the sensing device obtains the related information of the PDU session expected by the first network element, so as to establish the sensing connection and/or execute the sensing service, thereby improving quality of the communication service.

Optionally, the establishing, by the sensing device, a first PDU session based on the first information includes at least one of the following:
selecting, by the sensing device based on the first information, a PDU session that conforms to the related information of the PDU session expected by the first network element from existing PDU sessions as the first PDU session; and
creating, by the sensing device based on the first information, a new PDU session that conforms to the related information of the PDU session expected by the first network element as the first PDU session.

Optionally, the existing PDU session may include a PDU session established during registration of the sensing device.

Optionally, after establishing the first PDU session, the sensing device may send second information to the first network element, where the second information is used to indicate that the sensing device has established the first PDU session.

In an embodiment, using the sensing device as the UE, the UE selects an existing PDU session or creates a new PDU session to execute subsequent sensing services. For example, if the UE obtains PDU session parameters used by the sensing service, the UE can establish a PDU session, or select an existing PDU session (for example, a PDU session established during registration of the UE).

Optionally, the obtaining, by a sensing device, first information includes at least one of the following:
receiving, by the sensing device, the first information from the first network element through a second network element; and
directly receiving, by the sensing device, the first information from the first network element.

Optionally, the sensing device may receive the first information coming from the first network element and forwarded by the second network element.

Optionally, the first network element may send the first information to the second network element.

Optionally, after receiving the first information from the first network element, the second network element may send the first information to the sensing device.

Optionally, the sensing device may receive the first information from the first network element through a NAS signaling procedure of the second network element.

Optionally, the sensing device may receive the first information from the first network element through the NRSP protocol.

Optionally, the first network element may send the first information to the sensing device through the NRSP protocol.

Optionally, the sensing device may receive the first information from the first network element through other possible protocols.

Optionally, the first network element may send the first information to the sensing device through other possible protocols.

In an embodiment, using the sensing device being the UE, the first network element being the SF, and the second network element being the AMF as an example, the SF delivers UP Info through the AMF, that is, the SF needs to deliver the message to the AMF, and then the AMF sends it to the UE. A UE ID is used to help the AMF find the UE and forward the information to the UE. For example, it is transmitted through a Namf_Communication _N1N2MessageTransfer message.

In an embodiment, using the sensing device being the UE, the first network element being the SF, and the second network element being the AMF as an example, the SF transfers UP Info through the NRSP protocol, that is, the SF can directly transfer the message to the UE through the NRSP protocol. The IP address information of the UE may be used to find the UE, so as to send the information to the UE.

Optionally, the method further includes:
sending, by the sensing device, second information, where the second information is used to indicate that the sensing device has established the first PDU session.

Optionally, the sensing device may send the second information.

Optionally, the sensing device may send the second information to the first network element.

Optionally, the sensing device may send the second information to the first network element through the first PDU session.

Optionally, the sensing device may create or determine the first PDU session based on the related information of the PDU session expected by the first network element in the first information, and the first PDU session matches the PDU session expected by the first network element.

Optionally, the sensing device may send the second information to the first network element through a NAS message or NRSP protocol after establishing or determining the first PDU session, and the first network element may receive the second information and determine based on the second information that the sensing device has established the first PDU session. During creating or determining of the first PDU session, the sensing device can create or determine the first PDU session based on the first information from the first network element, so that the first PDU session matches the PDU session expected by the first network element. Matching means that parameter information of the first PDU session is the same as parameter information of the PDU session expected by the first network element, and the parameter information of the PDU session is similar to the related information of the PDU session. For example, during creating or determining of the first PDU session, the sensing device refers to the related information of the PDU session expected by the first network element to create or determine the first PDU session. Specifically, the sensing device refers to slice information, data network name information, RAT, access type information, and the like of the PDU session expected by the first network element, so as to create the first PDU session or determine the existing PDU session as the first PDU session.

Optionally, the second information may be sent after the sensing device establishes the first PDU session.

Optionally, the first network element may receive the second information.

Optionally, after receiving the second information, the first network element can learn that the first PDU session has been established.

In an embodiment, using the sensing device being the UE and the first network element being the SF as an example, the UE sends, to the SF through the PDU session, a PDU session establishment success message and/or the sensing capability information of the UE. Specifically, the UE determines the address of the SF based on received information such as the IP address/FQDN of the SF, and sends an establishment success message to the SF to inform the SF that the PDU session has been successfully established.

Optionally, the sending, by the sensing device, second information includes at least one of the following:
sending, by the sensing device, the second information to the first network element; and
sending, by the sensing device, the second information to the first network element through a second network element.

Optionally, the sensing device may send the second information to the first network element.

Optionally, the sensing device may send the second information to the first network element through the PDU session.

Optionally, the sensing device may determine the address of the first network element based on information such as the IP address or FQDN of the first network element.

Optionally, after determining the address of the first network element, the sensing device may send the second information to the first network element.

Optionally, the first network element may receive the second information from the sensing device, and determine based on the second information that the sensing device has established the first PDU session.

Optionally, the first network element may receive the second information from the sensing device through a PDU.

Optionally, after determining the address of the first network element, the sensing device may send the second information to the second network element.

Optionally, after receiving the second information, the second network element may send the second information to the first network element based on the address of the first network element.

Optionally, the first network element may receive the second information sent by the sensing device and forwarded by the second network element, and determine based on the second information that the sensing device has established the first PDU session.

In an embodiment, using the sensing device being the UE, the first network element being the SF, and the second network element being the AMF as an example, the UE sends, to the SF through the PDU session, a PDU session establishment success message and/or the sensing capability information of the UE. Specifically, the UE determines the address of the SF based on received information such as the IP address/FQDN of the SF, and sends an establishment success message to the SF to inform the SF that the PDU session has been successfully established. The UE may alternatively send the capability information of the UE to the SF, so as to register the sensing capability of the UE on the SF, which can help the SF to select UE for performing the sensing service in the future, where the message may be transferred through NRSP.

In an embodiment, using the sensing device being the UE, the first network element being the SF, and the second network element being the AMF as an example, the UE sends, to the SF through the AMF, a PDU session establishment success message. The message is used to inform the SF that the UE has established a PDU session, and then the SF can send messages to the UE through the PDU session, such as sensing service. Specifically, the UE determines the SF based on obtained identification information such as the address or FQND of the SF, and sends a PDU establishment success message to the AMF. After receiving the message, the AMF sends the message to the SF based on the SF identification information, where the message may be transferred through a Namf_Communication _N1N2MessageTransfer message.

Optionally, the method further includes:
receiving, by the sensing device, sensing measurement configuration information from the first network element, where the sensing measurement configuration information is used to indicate sensing measurement and/or is used to indicate start of executing the sensing service.

Optionally, the sensing device may receive the sensing measurement configuration information.

Optionally, the sensing device may perform sensing measurement after receiving the sensing measurement configuration information.

Optionally, the sensing device may receive sensing measurement configuration information from the first network element.

Optionally, before the first network element sends the sensing measurement configuration information to the sensing device, the first network element may obtain a sensing service request from the second network element or the sensing device.

Optionally, the first network element may send the sensing measurement configuration information.

Optionally, the first network element may send the sensing measurement configuration information to the sensing device.

Optionally, the sensing measurement configuration information may be sent by the first network element after the second information is received.

Optionally, the sensing measurement information may include at least one of a sensing service correlation ID (Sensing service correlation ID), sensing service description (sensing service description) information, and a sensing device identifier.

Optionally, the sensing configuration information may include a sensing resource, a QoS profile (bandwidth configuration, priority configuration, precision configuration, and the like) of a configured sensing service, a trigger condition for the configured sensing service, reporting information, and the like.

Optionally, the sensing configuration information may include at least one of sensing UE configuration information and sensing RAN configuration information.

Optionally, the sensing service correlation ID may be used to identify one sensing service session.

Optionally, the sensing service correlation ID may be assigned by the first network element.

Optionally, the identifier of the sensing device may be used to indicate a device participating in sensing signal measurement.

Optionally, the sensing device may include sensing UE and/or a sensing RAN. The identifier of the sensing device may include at least one of a sensing RAN ID and a sensing UE ID.

Optionally, the sensing service description information may include policy and control information formulated by the first network element for the sensing service description information, for example, it may include at least one of the following: sensing measurement mode, sensing service, sensing purpose, sensing measurement signal, and sensing measurement accuracy.

Optionally, the sensing measurement mode can include at least one of the following modes: the UE performs transmission and reception by itself (the UE may perform sensing measurement), other UEs perform transmission and this UE performs reception (the UE can perform sensing measurement), the base station performs transmission and the UE performs reception (the UE can perform sensing measurement), the UE performs transmission and the base station performs reception (the UE can send sensing signals, and may or may not perform sensing measurement), and the base station performs transmission and the base station performs reception. "Transmission" means sending measurement signals, and "reception" means receiving measurement signals and performing measurement.

Optionally, the sensing service may include or be used to indicate at least one of the following:
large sensing range with high real-time requirements (Delay Critical LSS);
large sensing range with low real-time requirements (LSS);
small sensing range with low real-time requirements (Delay Critical SSS); and
small sensing range with low real-time requirements (SSS).

Optionally, the sensing service may include a digital index, letter index, or letter alias or abbreviation of the above services, or other string indexes, or other string aliases or abbreviations.

Optionally, the sensing purpose may include one or more applications requiring sensing services supported by the sensing device, such as breathing monitoring or surrounding traffic environment monitoring, which are not limited by the embodiments of this application.

Optionally, the sensing measurement signal can indicate the sensing capability supported by the sensing device (capability of performing transmission, or reception, or both), and the signal used for sensing measurement.

Optionally, the sensing measurement quantity may include at least one of the following: RSRP, RSRQ, multipath arrival angle, multipath departure angle, multipath delay, and Doppler frequency.

Optionally, the sensing measurement signal may include a specific required sensing measurement quantity (such as RSRP, RSRQ, multipath arrival angle, multipath departure angle, multipath delay, and Doppler frequency).

Optionally, the sensing measurement accuracy may include at least one of the following: sensing resolution and sensing error.

In an embodiment, using the sensing device being the UE and the first network element being the SF as an example, the SF sends the sensing configuration information to the UE, and the UE performs sensing measurement.

Optionally, the SF may send the sensing measurement configuration information to the UE through the established sensing channel.

In an embodiment, using the sensing device being the UE and/or RAN as an example, the UE and/or the RAN performs sensing measurement. The UE and the RAN may perform sensing measurement based on the received sensing configuration information.

Optionally, the method further includes:
performing, by the sensing device, sensing measurement based on the sensing measurement configuration information to obtain a sensing measurement result.

Optionally, the sensing device may perform sensing measurement after receiving the sensing measurement configuration information.

Optionally, the sensing device may send the sensing measurement result.

Optionally, the sensing measurement result may include a sensing measurement signal or a sensing measurement quantity.

Optionally, the method further includes:
sending, by the sensing device, the sensing measurement result to the first network element.

Optionally, the sensing device may send the sensing measurement result.

Optionally, the sensing device may send the sensing measurement result to the first network element.

Optionally, the sensing device may send the sensing measurement result to the first network element through the sensing session, and the first network element may receive the sensing measurement result.

Optionally, the sensing measurement result may be sent by the sensing device after sensing measurement.

Optionally, the first network element may receive the sensing measurement result from the sensing device.

Optionally, the first network element may learn about the sensing measurement result after receiving the sensing measurement result from the sensing device.

In an embodiment, using the sensing device being the UE and the first network element being the SF as an example, the UE sends a UE sensing measurement result to the SF through the sensing session. The sensing result may be a sensing measurement signal and a sensing measurement quantity.

In an embodiment, using the sensing device being the UE and the first network element being the SF as an example, the SF sends sensing configuration information to the UE, and the UE performs sensing measurement and feeds back a result to the SF.

Optionally, the SF may send the sensing measurement configuration information to the UE through the established sensing channel.

In this embodiment of this application, the first network element with the function of providing the sensing service obtains the related information of the sensing device, and then the sensing device obtains the related information of the PDU session expected by the first network element, so as to establish the sensing connection and/or execute the sensing service, thereby improving quality of the communication service.

FIG. 4 is a third schematic flowchart of a sensing channel establishment method according to an embodiment of this application. As shown in FIG. 4, the method includes the following steps.

Step 400: A second network element sends a first message to a first network element, where the first message includes related information of a sensing device; the first message is used for triggering transmission of first information; the first information is used to indicate, to the sensing device, related information of a PDU session expected by the first network element; the first network element includes a network element with a function of providing sensing services; and the PDU session indicated by the first information is used for establishing a sensing connection and/or executing the sensing service.

Optionally, the second network element may be a network element responsible for a mobility management function.

Optionally, the second network element may be an AMF.

Optionally, the second network element may be a core network element.

Optionally, the first network element may be a network element with a function of providing sensing services.

Optionally, the first network element may be an SF.

Optionally, the sensing device may include sensing UE.

Optionally, the sensing device may include sensing UE and a RAN serving the sensing UE.

Optionally, the sensing device may include a sensing RAN.

Optionally, the embodiments of this application may use the sensing device being the UE as an example, and other devices that can be used as sensing devices can be similarly applied to the embodiments of this application.

Optionally, the PDU session indicated by the first information may refer to establishing a sensing connection and/or executing the sensing service based on a user plane (User plane, UP) manner.

Optionally, the second network element may send the first message to the first network element to indicate the related information of the sensing device to the first network element.

Optionally, the first network element may receive the first message sent by the second network element, and then learn about the related information of the sensing device based on the first message, so as to learn that the sensing device needs to establish a sensing connection.

Optionally, the first network element may send the first information to the sensing device after receiving the first message sent from the second network element.

Optionally, after receiving the first information from the first network element, the sensing device may learn, based on the first information, the related information of the PDU session expected by the first network element.

In this embodiment of this application, the second network element sends the related information of the sensing device to the first network element with the function of providing sensing services, so that the first network element indicates the related information of the PDU session expected by the first network element to the sensing device for establishing a sensing connection and/or executing the sensing service, thereby improving quality of the communication service.

Optionally, the first message is used to request the related information of the PDU session.

Optionally, after receiving the first message, the first network element may determine that there is a sensing device requesting to establish a sensing channel or a sensing connection.

Optionally, after receiving the first message, the first network element may determine that there is a sensing device requesting to establish a PDU session for establishing a sensing connection and/or performing the sensing service.

Optionally, the related information of the PDU session may include identification information of the first network element or slice information.

Optionally, the first message includes at least one of the following:
identification information of the sensing device;
IP address information of the sensing device; and
first indication information, where the first indication information indicates that the first message is used for requesting related information of a PDU session expected by the first network element.

Optionally, the identification information of the sensing device may be used to identify the sensing device.

Optionally, the identification information of the sensing device may be used to uniquely identify the sensing device.

Optionally, the identification information of the sensing device may be a temporarily generated sensing device identifier or a long-term or permanent sensing device identifier.

Optionally, the identification information of the sensing device may be a temporary identifier generated by the second network element or an identifier dedicated to establishing the sensing connection and/or executing the sensing service.

Optionally, the IP address information of the sensing device may be used to indicate the IP address of the sensing device; a sensing device can be found based on the IP address information, and information can be transmitted with the sensing device.

Optionally, the first indication information may be used to indicate that the first message is a request for obtaining related information for establishing a PDU session.

Optionally, the first indication information may be used to request identification information, slice, DNN information, and the like of the first network element.

Optionally, after receiving the first message, the first network element can determine an identity and/or location of the sensing device based on the identification information of the sensing device in the first message.

Optionally, after receiving the first message, the first network element can determine based on the identification information of the sensing device in the first message that a sensing device requests to establish a sensing connection and/or perform the sensing service, or requests to establish a PDU session.

Optionally, after receiving the first message, the first network element can find a sensing device based on the IP address information of the sensing device in the first message, and transmit information with the sensing device.

In an embodiment, using the sensing device being the UE, the first network element being the SF, and the second network element being the AMF as an example, the AMF may generate a temporary UE identifier, and the SF may determine specific UE based on the UE identifier, or perform information transmission with the UE based on the information of the UE identifier through the AMF.

In an embodiment, using the sensing device being the UE and the first network element being the SF as an example, the SF may directly send network element information of the SF and related information of the PDU session to the UE based on IP address information of the UE.

Optionally, before the sending, by a second network element, a first message to a first network element, the method further includes:
receiving, by the second network element, first request information, where the first request information is used to trigger the sensing service; and
the sending, by a second network element, a first message to a first network element includes:
   selecting, by the second network element, the first network element based on the first request information; and
   sending, by the second network element, the first message to the first network element.

Optionally, the second network element may receive the first request information.

Optionally, the second network element may receive first request information sent by other network elements or sensing devices.

Optionally, the first request information may include a request from other network elements, such as a service request for a sensing service.

Optionally, the first request information may include a request of the UE, such as a registration request.

Optionally, after receiving the first request information, the second network element may select the first network element based on the first request information.

Optionally, the second network element may select the first network element based on capability information and location information of the sensing device, load information and capability information of the first network element, and the like. Such information may be obtained from the sensing device through the registration step of the sensing device before. The second network element can query network elements in NRF to select an appropriate first network element, for example, selecting, based on capability information and location information of the sensing device, a first network element satisfying such information. That is, the capability information of the first network element may cover the capability information of the sensing device, and the area that the first network element can handle may also cover the location information of the sensing device, and then a final appropriate first network element can be selected based on the load information and capability information of the first network element.

Optionally, after selecting the first network element, the second network element may send the first message to the first network element.

Optionally, the first network element may receive the first message.

In an embodiment, using the first network element being SF and the second network element being the AMF as an example, the AMF may send a first message to the SF, where the first message may be a request message for requesting to obtain related information for establishing a PDU session.

In an embodiment, using the sensing device being the UE, the first network element being the SF, and the second network element being the AMF as an example, the AMF may send a first message to the SF, where the first message may be a request message, which includes identification information of the sensing UE and requests to obtain related information for establishing a PDU session, for example, requesting to obtain the identification information of the SF, slice information of the PDU session, and the like.

In an embodiment, using the sensing device being the UE, the first network element being the SF, and the second network element being the AMF as an example, the AMF may select the SF and prepare to request the SF for related information for establishing a PDU session. Before that, the AMF may trigger this step based on a request of other network elements (such as a service request for the sensing service) or a request of the UE (such as a registration request).

Optionally, the request of other network elements or the request of the UE may be first request information.

In an embodiment, using the sensing device being the UE, the first network element being the SF, and the second network element being the AMF as an example, the AMF may select the SF based on capability information and location information of the UE, load information and capability information of the SF, and the like. This information may be obtained previously through a registration procedure of the UE, or by querying network elements in the NRF to select an appropriate SF. The AMF can query network elements in the NRF to select an appropriate SF, for example, selecting, based on capability information and location information of the UE, a SF satisfying such information. That is, the capability information of the SF may cover the capability information of the UE, and the area that the SF can handle may also cover the location information of the UE, and then a final appropriate first network element can be selected based on the load information and capability information of the SF.

Optionally, before the sending, by a second network element, a first message to a first network element, the method further includes:
receiving, by the second network element, third request information that is sent by the first network element based on second request information, where the second request information is used for triggering the sensing service, and the third request information is used for requesting identification information of a sensing device capable of providing the sensing service; and
the sending, by a second network element, a first message to a first network element includes:
   selecting, by the second network element, the first network element based on the third request information; and
   sending, by the second network element, the first message to the first network element.

Optionally, the second network element may receive the third request information.

Optionally, the second network element may receive the third request information from the first network element.

Optionally, the first network element may receive the second request information.

Optionally, the first network element may receive second request information sent by other software, applications, or other network elements.

Optionally, after receiving the second request information sent by other software, applications or other network elements, the first network element may learn that there is a sensing device requesting to establish a sensing connection and/or perform the sensing service, or requesting to establish a PDU session.

Optionally, after receiving the second request information, the first network element may send the third request information to the second network element.

Optionally, the third request information may include an indication message requesting to obtain information about a sensing device with a sensing capability, and is used to indicate requesting to obtain information about the sensing device with the sensing capability.

In an embodiment, using the sensing device being the UE, the first network element being the SF, and the second network element being the AMF as an example, the SF may receive a request (the second request information) for the sensing service sent by network elements such as other software, applications, or other SFs, and trigger a request procedure to the AMF.

In an embodiment, using the sensing device being the UE, the first network element being the SF, and the second network element being the AMF as an example, the SF sends third request information to the AMF, requesting to obtain information about the UE, where the UE may be UE performing a sensing task, and the AMF selects an appropriate sensing device and feeds it back to the SF. Selection of the sensing device may be based on the capability information and location information of the sensing device, load information and capability information of the SF, and the like.

Optionally, the third request information further includes at least one of the following:
description information of the sensing service; and
requirement information of the sensing service.

Optionally, the description information of the sensing service is used to indicate a sensing service to be executed, and require the target sensing device to support the sensing service.

Optionally, the requirement information of the sensing service is used to indicate a requirement of a sensing service to be executed, and require the target sensing device to meet the requirement of the sensing service.

Optionally, after receiving the second request information sent by other software, applications, or other network elements, the first network element may learn that there is a sensing device requesting to establish a sensing connection and/or perform the sensing service, or requesting to establish a PDU session; and may also learn about description information and/or requirement information of the sensing service requested by the sensing device to generate and send third request information to the second network element.

Optionally, the method further includes:
receiving, by the second network element, first information from the first network element; and
forwarding, by the second network element, the first information to the sensing device.

Optionally, the second network element may receive the first information.

Optionally, that second network element may receive the first information from the first network element.

Optionally, that second network element may receive the first information from the first network element through a NAS signalling procedure.

Optionally, the second network element may send the first information after receiving the first information from the first network element.

Optionally, after receiving the first information from the first network element, the second network element may send the first information to the sensing device.

Optionally, after receiving the first information from the first network element, the second network element may send the first information to the sensing device through the NAS signaling procedure.

Optionally, the first network element may send the first information to the second network element.

Optionally, the first network element may send the first information to the second network element through a NAS signalling procedure.

Optionally, the sensing device may receive the first information from the second network element.

Optionally, the sensing device may receive the first information from the second network element through the NAS signaling procedure.

In an embodiment, using the sensing device being the UE, the first network element being the SF, and the second network element being the AMF as an example, the SF delivers UP Info through the AMF, that is, the SF needs to deliver the message to the AMF, and then the AMF sends it to the UE. A UE ID is used to help the AMF find the UE and forward the information to the UE. For example, it is transmitted through a Namf_Communication_N1N2MessageTransfer message.

Optionally, the method further includes:
receiving, by the second network element, second information from the sensing device; and
forwarding, by the second network element, the second information to the first network element.

Optionally, the second network element may receive the second information.

Optionally, the second network element may receive the second information from the sensing device.

Optionally, after receiving the second information from the sensing device, the second network element may send the second information to the first network element based on the address of the first network element.

Optionally, the sensing device may determine the address of the first network element.

Optionally, after determining the address of the first network element, the sensing device may send the second information to the second network element, and the second information includes the address of the first network element.

Optionally, the first network element may receive the second information from the second network element, and determine based on the second information that the sensing device has established the first PDU session.

In an embodiment, using the sensing device being the UE, the first network element being the SF, and the second network element being the AMF as an example, the UE sends, to the SF through the AMF, a PDU session establishment success message. The message is used to inform the SF that the UE has established a PDU session, and then the SF can send messages to the UE through the PDU session, such as sensing service.

Optionally, the UE determines the SF based on obtained identification information such as the address or FQND of the SF, and sends a PDU establishment success message to the AMF. After receiving the message, the AMF sends the message to the SF based on the SF identification information, where the message may be transferred through a Namf_Communication_N1N2MessageTransfer message.

Optionally, the method further includes:
receiving, by the second network element, third information from the first network element, where the third information is used to indicate at least one of the following: a first PDU session has been established, parameter information of the first PDU session, identification information of the sensing device, and IP address information of the sensing device; and
storing, by the second network element, a related parameter of the PDU session based on the third information.

Optionally, the second network element may receive the third information.

Optionally, the second network element may receive the third information from the first network element.

Optionally, after receiving the third information, the second network element may determine that the first PDU session has been established, and obtain at least one of the parameter information of the first PDU session, the identification information of the sensing device, and the IP address information of the sensing device.

Optionally, after receiving the third information, the second network element may store the related parameter of the PDU session based on the third information.

Optionally, the first network element may send the third information.

Optionally, the first network element may send the third information to the second network element.

Optionally, the parameter information of the first PDU session may be IP address information of the PDU session, which is used to indicate which PDU session it is.

Optionally, the identification information of the sensing device may be used to identify the sensing device.

Optionally, the identification information of the sensing device may be a temporarily generated sensing device identifier or a long-term sensing device identifier.

Optionally, the IP address information of the sensing device may be used to indicate the IP address of the sensing device; a sensing device can be found based on the IP address information, and information can be transmitted with the sensing device.

In an embodiment, using the sensing device being the UE, the first network element being the SF, and the second network element being the AMF as an example, the SF may send result information of PDU session establishment to the AMF, informing the AMF of a PDU session establishment result and related parameters. The AMF can store parameters related to the PDU session and bind them to context information of the UE, so that when the SF needs to be switched due to movement of the UE in the future, related context can also be changed without losing information.

In an embodiment, using the sensing device being the UE, the first network element being the SF, and the second network element being the AMF as an example, the AMF may generate a temporary UE identifier, and the SF may determine specific UE based on the UE identifier, or perform information transmission with the UE based on the information of the UE identifier through the AMF.

In an embodiment, using the sensing device being the UE and the first network element being the SF as an example, the SF may directly send network element information of the SF and related information of the PDU session to the UE based on IP address information of the UE.

In this embodiment of this application, the second network element sends the related information of the sensing device to the first network element with the function of providing sensing services, so that the first network element indicates the related information of the PDU session expected by the first network element to the sensing device for establishing a sensing connection and/or executing the sensing service, thereby improving quality of the communication service.

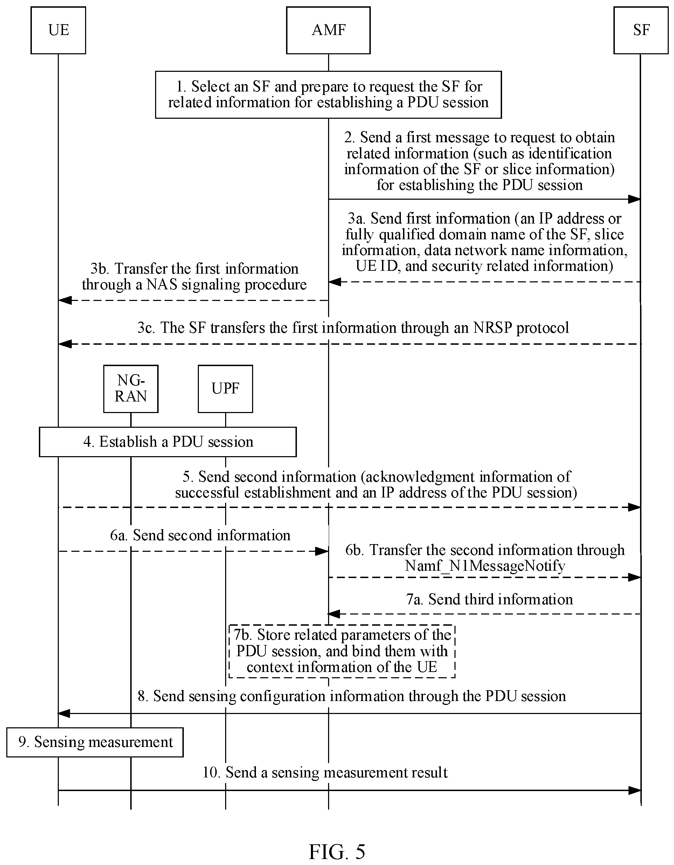

In an embodiment, FIG. 5 is a first schematic flowchart of a procedure of a sensing channel establishment method according to an embodiment of this application. This embodiment describes a procedure of selecting an SF and sending UE information to the SF as triggered by the AMF receiving requests from other software, applications, or UEs. As shown in FIG. 5, the method includes the following steps.

Step 1: The AMF selects an SF and prepares to request the SF for related information (which may be a first message) for establishing a PDU session. Before that, the AMF may trigger this step based on a request of other network elements (such as a service request for the sensing service) or a request of the UE (such as a registration request).

Optionally, the request of other network elements or the request of the UE may be first request information.

Selection of the SF may be based on the capability information and location information of the sensing device, load information and capability information of the SF, and the like. This information may be obtained previously through a registration procedure of the UE, or by querying network elements in the NRF to select an appropriate SF.

The UE may be a specific example of the sensing device. The sensing device may include at least one of sensing UE, sensing UE and a RAN serving the sensing UE, and a sensing RAN.

Step 2: The AMF sends a request message (which may be a first message) to the SF, requesting to obtain related information for establishing a PDU session. Specifically, the AMF sends identification information of the UE to the SF and requests to obtain the related information (such as identification information of the SF or slice information) for establishing the PDU session. The request message includes:
ID information of the UE, which is used to identify the UE, where specific UE can be identified based on this information, which may be a temporarily generated UE identifier or a long-term UE identifier. For example, the AMF generates a temporary UE identifier, and the SF may use the UE identifier to determine specific UE; or transmit information to the UE based on the information of the UE identifier through the AMF;
IP address information of the UE, which is used to indicate an IP address of the UE, where specific UE can be found based on the IP address information and information transmission is performed with the UE. For example, the SF can directly send UP Info to the UE based on the IP address information; and
indication information for obtaining UP Info, which is used to indicate that the message is for requesting to obtain related information for establishing a PDU session, and used for requesting identification information of the SF, slice, DNN information, and the like.

Step 3: The SF sends a message (which may be the first information) to the UE to inform the UE how to help the UE establish a PDU session. After receiving the request initiated by the AMF, the SF can feed back its information and preferred PDU session information to the UE, including parameters for establishing the PDU session, such as at least one of DNN, S-NSSAI and an address of the SF. It should be noted that the SF may transfer pass the message through a NAS signaling procedure of the AMF, or directly send the message to the UE through the NRSP protocol.

In step 3, there are two transfer manners and either of them can be selected.

3a-3b: UP Info is transferred through the AMF, that is, the SF needs to transfer the message to the AMF, and then the AMF sends it to the UE. A UE ID is used to help the AMF find the UE and forward the information to the UE. For example, it is transmitted through a Namf_Communication _N1N2MessageTransfer message.

3c: UP Info is transferred through the NRSP protocol, that is, the SF can directly transfer the message to the UE through the NRSP protocol. The IP address information of the UE may be used to find the UE, so as to send the information to the UE.

Step 3: The transferred information includes:
the FQDN or IP address of the SF, which is used to indicate an SF and may be an IP address, a MAC address, or the like of the SF, or FQDN (full domain name) information of the SF, where specific UE can be found based on the IP address information and information transmission is performed with the UE;
the S-NSSAI for the PDU session, which is used to indicate corresponding slice information for establishing the PDU session;
DNN for the PDU session, which is used to indicate corresponding DNN (data network name) information for establishing the PDU session;
RAT type, which is used to indicate corresponding RAT type information for establishing the PDU session;
access type, which is used to indicate corresponding access type (Access Type) information for establishing the PDU session;
UE ID information, which is used to identify the UE, where specific UE can be determined based on this information. It may be a temporarily generated UE identifier or a long-term UE identifier. For example, the AMF generates a temporary UE identifier, and the SF may use the UE identifier to determine specific UE; or transmit information to the UE based on the information of the UE identifier through the AMF;
IP address information of the UE, which is used to indicate an IP address of the UE, where specific UE can be found based on the IP address information and information transmission is performed with the UE. For example, the SF can directly send UP Info to the UE based on the IP address information; and
security related information, which is security-related information and may be used to establish a secure tunnel, or encrypt data to ensure security and privacy of the data. It may be a security certificate, an encryption key, or the like.

Optionally, the first information may include indication information for transmitting the sensing service using a PDU session, which is used to indicate that the requested sensing service needs to be completed using the PDU session. The sensing service includes a sensing configuration (for example, the SF sends the sensing configuration, sensing service description, and the like to the UE) and a sensing measurement result feedback (such as the UE sends a sensing measurement result to the SF).

Optionally, before sending of the first information, the SF may alternatively determine to transmit sensing service information in PDU session manner, based on at least one factor, such as local policy, control plane load, user plane load, sensing capability information of the UE, requirement information of the sensing service, and a transmission delay requirement.

Step 4: The UE selects an existing PDU session or creates a new PDU session to execute subsequent sensing services. For example, as shown in step 3, if the UE obtains PDU session parameters used by the sensing service, the UE can establish a PDU session, or select an existing PDU session (for example, a PDU session established during registration of the UE).

Steps 5 and 6a-6b: After establishing the PDU session, the UE sends session establishment success information (which may be the second information) to the SF through the PDU session (step 5) or through a NAS message (step 6), which may also carry sensing capability information. Either one can be selected; or the step 6 of transferring the PDU session establishment success information can be combined with the step 5 of transferring the sensing capability information of the UE.

Step 5: The UE sends, to the SF through the PDU session, a PDU session establishment success message and/or the sensing capability information of the UE (which may be the second information). Specifically, the UE determines the address of the SF based on received information such as the IP address/FQDN of the SF in step 3, and sends an establishment success message to the SF to inform the SF that the PDU session has been successfully established. The UE may alternatively send the capability information of the UE to the SF, so as to register the sensing capability of the UE on the SF, which can help the SF to select UE for performing the sensing service in the future.

It should be noted that this message may alternatively be transferred through NRSP.

The specific transferred information may be at least one of the following:
sensing capability information, which is used to indicate information about a sensing related capability that the UE has;
acknowledgment information of successful establishment, which is used to indicate successful establishment of the PDU session; and
the IP address of the PDU session, which is the IP address information of the PDU session and is used to indicate which PDU session it is.

The sensing capability related information includes:
sensing capability indication information, which is used to indicate that the UE is UE with a sensing capability.

Optionally, the sensing capability indication information is also used to indicate specific sensing capabilities of the UE, which, for example, may include at least one of the following: sensing measurement mode, sensing service, sensing purpose, sensing measurement signal, and sensing measurement accuracy.

The sensing measurement mode may include at least one of the following modes: the UE performs transmission and reception by itself, other UEs perform transmission and this UE performs reception, the base station performs transmission and the UE performs reception, the UE performs transmission and the base station performs reception, and the base station performs transmission and the base station performs reception. "Transmission" means sending measurement signals, and "reception" means receiving measurement signals and performing measurement.

Sensing services may include at least one of the following: large sensing range with high real-time requirements (Delay Critical LSS); large sensing range with low real-time requirements (LSS); small sensing range with low real-time requirements (Delay Critical SSS); and small sensing range with low real-time requirements (SSS). It can alternatively be represented by numbers, letters, or other character strings indicating these services.

The sensing purpose may include one or more applications requiring sensing services supported by the sensing device, such as breathing monitoring or surrounding traffic environment monitoring.

The sensing measurement signal indicates a signal used for sensing measurement supported by the sensing device (capability of performing transmission, or reception, or both). For example, at least one of the following may be included: RSRP, RSRQ, multipath arrival angle, multipath departure angle, multipath delay, and Doppler frequency.

The sensing measurement accuracy may include at least one of the following: sensing resolution and sensing error.

Steps 6a-6b: The UE sends a PDU session establishment success message (which may be the second information) to the SF through the AMF. The message is used to inform the SF that the UE has established a PDU session, and then the SF can send messages to the UE through the PDU session, such as sensing service. Specifically, the UE determines the SF based on the identification information obtained in step 3 such as the address or FQND of the SF, and sends a PDU establishment success message to the AMF. After receiving the message, the AMF sends the message to the SF based on the identification information of the SF.

The message can be transferred through a Namf_Communication_N1N2MessageTransfer message.

The transferred information may be at least one of the following:
acknowledgment information of successful establishment, which is used to indicate successful establishment of the PDU session;
the IP address of the PDU session, which is the IP address information of the PDU session and is used to indicate which PDU session it is; and
the FQDN or IP address of the SF, which is used to indicate an SF and may be an IP address of the SF or FQDN information of the SF, or may be identification information of the SF and the like.

Steps 7a-7b: The SF sends result information (which may be the third information) of PDU session establishment to the AMF, informing the AMF of the result of PDU session establishment and related parameters. The AMF can store parameters related to the PDU session and bind them to context information of the UE, so that when the SF needs to be switched due to movement of the UE in the future, related context can also be changed without losing information. Specifically, the information sent and stored may include:
the IP address of the PDU session, which is the IP address information of the PDU session and is used to indicate which PDU session it is;
the FQDN or IP address of the SF, which is used to indicate an SF and may be an IP address of the SF, or FQDN information of the SF;
UE ID information, which is used to identify the UE, where specific UE can be determined based on this information. It may be a temporarily generated UE identifier or a long-term UE identifier. For example, the AMF generates a temporary UE identifier, and the SF may use the UE identifier to determine specific UE; or transmit information to the UE based on the information of the UE identifier through the AMF;
IP address information of the UE, which is used to indicate an IP address of the UE, where specific UE can be found based on the IP address information and information transmission is performed with the UE. For example, the SF can directly send UP Info to the UE based on the IP address information;
the S-NSSAI for the PDU session, which is used to indicate corresponding slice information for establishing the PDU session;
DNN for the PDU session, which is used to indicate corresponding DNN (data network name) information for establishing the PDU session;
RAT type, which is used to indicate corresponding RAT type information for establishing the PDU session; and
access type, which is used to indicate corresponding access type (Access Type) information for establishing the PDU session.

Steps 8 to 10: The SF sends sensing configuration information to the UE, and the UE performs sensing measurement and feeds back a result to the SF.

Step 8: The SF sends the sensing configuration information to the UE. The sensing configuration information may include at least one of a sensing service correlation ID (Sensing service correlation ID), sensing service description (sensing service description) information, and a sensing device identifier.

The sensing service correlation ID may be used to identify one sensing service session. The sensing service correlation ID may be assigned by the SF.

The sensing device identifier is used to indicate a device participating in sensing signal measurement. The sensing device may include sensing UE and/or a sensing RAN. The identifier of the sensing device may include at least one of a sensing RAN ID and a sensing UE ID.

The sensing service description information may include policy and control information formulated by the SF for the sensing service description information, for example, it may include at least one of the following: sensing measurement mode, sensing service, sensing purpose, sensing measurement signal, and sensing measurement accuracy. For the description of each item, refer to the description in 1a.

The sensing measurement signal may include a specific required sensing measurement quantity (such as RSRP, RSRQ, multipath arrival angle, multipath departure angle, multipath delay, and Doppler frequency).

Optionally, the sensing configuration information may also include a sensing resource, a QoS profile (bandwidth configuration, priority configuration, precision configuration, and the like) of a configured sensing service, a trigger condition for the configured sensing service, reporting information, and the like.

The sensing configuration information may include at least one of sensing UE configuration information and sensing RAN configuration information.

For example, the SF can call the sensing configuration transfer service of the AMF, which includes the sensing measurement configuration information.

Before this step, the SF may obtain the sensing service request through the AF or the UE.

Step 9: The UE and/or RAN performs sensing measurement. The UE and the RAN may perform sensing measurement based on the received sensing configuration information.

Step 10: The UE sends a UE sensing measurement result to the SF through the sensing session. The sensing result may be the sensing measurement signal and the sensing measurement quantity.

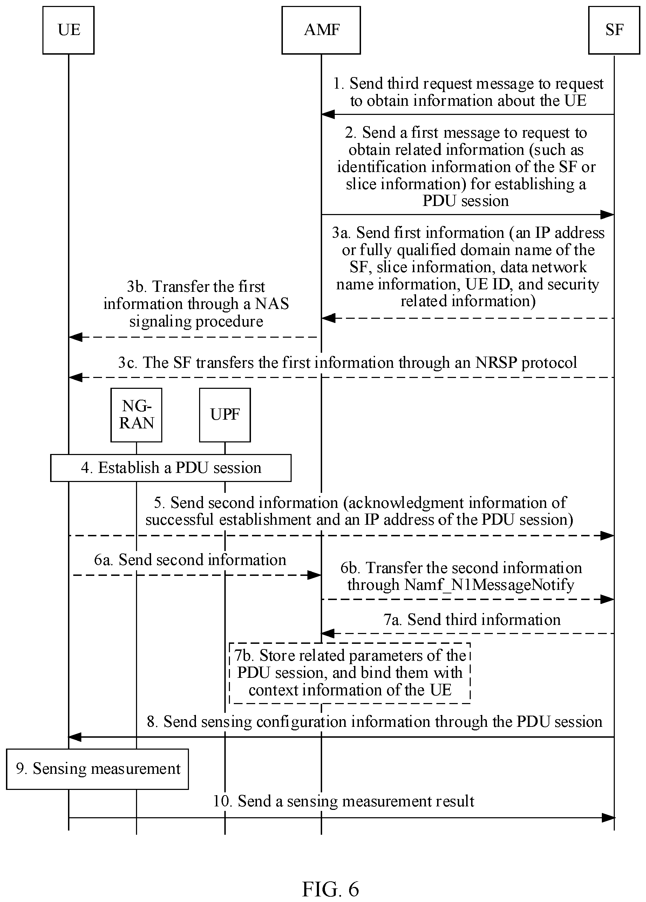

In an embodiment, FIG. 6 is a second schematic flowchart of a procedure of a sensing channel establishment method according to an embodiment of this application. This embodiment describes a procedure of requesting the AMF as triggered by the SF receiving sensing service requests (which may be the second request information) sent by network elements such as other software, applications, or other SFs. As shown in FIG. 6, the method includes the following steps:

Step 1: The SF sends a request message (which may be the third request information) to the AMF, requesting to obtain information about the UE, where the UE may be UE for performing a sensing task. The request message includes:
an indication message requesting to obtain information about UE with a sensing capability, which is used to indicate that the request is to obtain information about the UE with a specific sensing capability.
description information of the sensing service, which is used to indicate a sensing service to be executed, and require the target sensing device to support the sensing service; and
requirement information of the sensing service, which is used to indicate a requirement of a sensing service to be executed, and require the target sensing device to meet the requirement of the sensing service.

The AMF selects an appropriate sensing device and feeds it back to the SF. Selection of the sensing device may be based on the capability information and location information of the sensing device, load information and capability information of the SF, and the like.

Step 2: The AMF sends the first message to the SF, where the first message indicates related information for establishing a PDU session. Specifically, the AMF sends identification information of the UE to the SF and requests to obtain the related information (such as identification information of the SF or slice information) for establishing the PDU session. The request message includes:
ID information of the UE, which is used to identify the UE, where specific UE can be identified based on this information, which may be a temporarily generated UE identifier or a long-term UE identifier. For example, the AMF generates a temporary UE identifier, and the SF may use the UE identifier to determine specific UE; or transmit information to the UE based on the UE identification information through AMF;
IP address information of the UE, which is used to indicate an IP address of the UE, where specific UE can be found based on the IP address information and information transmission is performed with the UE. For example, the SF can directly send UP Info to the UE based on the IP address information; and
indication information for obtaining UP Info, which is used to indicate that the message is for requesting to obtain related information for establishing a PDU session, and used for requesting identification information of the SF, slice, DNN information, and the like.

Step 3: The SF sends a message (which may be the first information) to the UE to inform the UE how to help the UE establish a PDU session. After receiving the request initiated by the AMF, the SF can feed back its information and preferred PDU session information to the UE, including parameters for establishing the PDU session, such as at least one of DNN, S-NSSAI and an address of the SF. It should be noted that the SF may transfer pass the message through a NAS signaling procedure of the AMF, or directly send the message to the UE through the NRSP protocol.

In step 3, there are two transfer manners and either of them can be selected.

3a-3b: UP Info is transferred through the AMF, that is, the SF needs to transfer the message to the AMF, and then the AMF sends it to the UE. A UE ID is used to help the AMF find the UE and forward the information to the UE. For example, it is transmitted through a Namf_Communication _N1N2MessageTransfer message.

3c: UP Info is transferred through the NRSP protocol, that is, the SF can directly transfer the message to the UE through the NRSP protocol. The IP address information of the UE may be used to find the UE, so as to send the information to the UE.

Step 3: The transferred information includes:
the FQDN or IP address of the SF, which is used to indicate an SF and may be an IP address, a MAC address, or the like of the SF, or FQDN (full domain name) information of the SF. Specific UE can be found based on the IP address information and information transmission is performed with the UE;
the S-NSSAI for the PDU session, which is used to indicate corresponding slice information for establishing the PDU session;
DNN for the PDU session, which is used to indicate corresponding DNN (data network name) information for establishing the PDU session;
RAT type, which is used to indicate corresponding RAT type information for establishing the PDU session;
access type, which is used to indicate corresponding access type (Access Type) information for establishing the PDU session;
UE ID information, which is used to identify the UE, where specific UE can be determined based on this information. It may be a temporarily generated UE identifier or a long-term UE identifier. For example, the AMF generates a temporary UE identifier, and the SF may use the UE identifier to determine specific UE; or transmit information to the UE based on the information of the UE identifier through the AMF;
IP address information of the UE, which is used to indicate an IP address of the UE, where specific UE can be found based on the IP address information and information transmission is performed with the UE. For example, the SF can directly send UP Info to the UE based on the IP address information; and
security related information, which is security-related information and may be used to establish a secure tunnel, or encrypt data to ensure security and privacy of the data. It may be a security certificate, an encryption key, or the like.

Optionally, the first information may include indication information for transmitting the sensing service using a PDU session, which is used to indicate that the requested sensing service needs to be completed using the PDU session. The sensing service includes a sensing configuration (for example, the SF sends the sensing configuration, sensing service description, and the like to the UE) and a sensing measurement result feedback (such as the UE sends a sensing measurement result to the SF).

Optionally, before sending of the first information, the SF may alternatively determine to transmit sensing service information in PDU session manner, based on at least one factor, such as local policy, control plane load, user plane load, sensing capability information of the UE, requirement information of the sensing service, and a transmission delay requirement.

Step 4: The UE selects an existing PDU session or creates a new PDU session to execute subsequent sensing services. For example, as shown in step 3, if the UE obtains PDU session parameters used by the sensing service, the UE can establish a PDU session, or select an existing PDU session (for example, a PDU session established during registration of the UE).

Steps 5 and 6a-6b: After establishing the PDU session, the UE sends session establishment success information (which may be the second information) to the SF through the PDU session (step 5) or through a NAS message (step 6), which may also carry sensing capability information. Either one can be selected; or the step 6 of transferring the PDU session establishment success information can be combined with the step 5 of transferring the sensing capability information of the UE.

Step 5: The UE sends, to the SF through the PDU session, a PDU session establishment success message and/or the sensing capability information of the UE (which may be the second information). Specifically, the UE determines the address of the SF based on received information such as the IP address/FQDN of the SF in step 3, and sends an establishment success message to the SF to inform the SF that the PDU session has been successfully established. The UE may alternatively send the capability information of the UE to the SF, so as to register the sensing capability of the UE on the SF, which can help the SF to select UE for performing the sensing service in the future.

It should be noted that this message may alternatively be transferred through NRSP.

The specific transferred information may be at least one of the following:
sensing capability information, which is used to indicate information about a sensing related capability that the UE has;
acknowledgment information of successful establishment, which is used to indicate successful establishment of the PDU session; and
the IP address of the PDU session, which is the IP address information of the PDU session and is used to indicate which PDU session it is.

The sensing capability related information includes:
sensing capability indication information, which is used to indicate that the UE is UE with a sensing capability.

Optionally, the sensing capability indication information is also used to indicate specific sensing capabilities of the UE, which, for example, may include at least one of the following: sensing measurement mode, sensing service, sensing purpose, sensing measurement signal, and sensing measurement accuracy.

The sensing measurement mode may include at least one of the following modes: the UE performs transmission and reception by itself, other UEs perform transmission and this UE performs reception, the base station performs transmission and the UE performs reception, the UE performs transmission and the base station performs reception, and the base station performs transmission and the base station performs reception. "Transmission" means sending measurement signals, and "reception" means receiving measurement signals and performing measurement.

Sensing services may include at least one of the following: large sensing range with high real-time requirements (Delay Critical LSS); large sensing range with low real-time requirements (LSS); small sensing range with low real-time requirements (Delay Critical SSS); and small sensing range with low real-time requirements (SSS). It can alternatively be represented by numbers, letters, or other character strings indicating these services.

The sensing purpose may include one or more applications requiring sensing services supported by the sensing device, such as breathing monitoring or surrounding traffic environment monitoring.

The sensing measurement signal indicates a signal used for sensing measurement supported by the sensing device (capability of performing transmission, or reception, or both). For example, at least one of the following may be included: RSRP, RSRQ, multipath arrival angle, multipath departure angle, multipath delay, and Doppler frequency.

The sensing measurement accuracy may include at least one of the following: sensing resolution and sensing error.

Steps 6a-6b: The UE sends a PDU session establishment success message (which may be the second information) to the SF through the AMF. The message is used to inform the SF that the UE has established a PDU session, and then the SF can send messages to the UE through the PDU session, such as sensing service. Specifically, the UE determines the SF based on the identification information obtained in step 3 such as the address or FQND of the SF, and sends a PDU establishment success message to the AMF. After receiving the message, the AMF sends the message to the SF based on the identification information of the SF.

The message can be transferred through a Namf_Communication_N1N2MessageTransfer message.

The transferred information may be at least one of the following:
acknowledgment information of successful establishment, which is used to indicate successful establishment of the PDU session;
the IP address of the PDU session, which is the IP address information of the PDU session and is used to indicate which PDU session it is; and
the FQDN or IP address of the SF, which is used to indicate an SF and may be an IP address of the SF, or FQDN information of the SF, or may be identification information of the SF and the like.

Steps 7a-7b: The SF sends result information (which may be the third information) of PDU session establishment to the AMF, informing the AMF of the result of PDU session establishment and related parameters. The AMF can store parameters related to the PDU session and bind them to context information of the UE, so that when the SF needs to be switched due to movement of the UE in the future, related context can also be changed without losing information. Specifically, the information sent and stored may include:
the IP address of the PDU session, which is the IP address information of the PDU session and is used to indicate which PDU session it is;
the FQDN or IP address of the SF, which is used to indicate an SF and may be an IP address of the SF, or FQDN information of the SF;
UE ID information, which is used to identify the UE, where specific UE can be determined based on this information. It may be a temporarily generated UE identifier or a long-term UE identifier. For example, the AMF generates a temporary UE identifier, and the SF may use the UE identifier to determine specific UE; or transmit information to the UE based on the information of the UE identifier through the AMF;
IP address information of the UE, which is used to indicate an IP address of the UE, where specific UE can be found based on the IP address information and information transmission is performed with the UE. For example, the SF can directly send UP Info to the UE based on the IP address information;
the S-NSSAI for the PDU session, which is used to indicate corresponding slice information for establishing the PDU session;
DNN for the PDU session, which is used to indicate corresponding DNN (data network name) information for establishing the PDU session;
RAT type, which is used to indicate corresponding RAT type information for establishing the PDU session; and
access type, which is used to indicate corresponding access type (Access Type) information for establishing the PDU session.

Steps 8 to 10: The SF sends sensing configuration information to the UE, and the UE performs sensing measurement and feeds back a result to the SF.

Step 8: The SF sends the sensing configuration information to the UE. The sensing configuration information may include at least one of a sensing service correlation ID (Sensing service correlation ID), sensing service description (sensing service description) information, and a sensing device identifier.

The sensing service correlation ID may be used to identify one sensing service session. The sensing service correlation ID may be assigned by the SF.

The sensing device identifier is used to indicate a device participating in sensing signal measurement. The sensing device may include sensing UE and/or a sensing RAN. The identifier of the sensing device may include at least one of a sensing RAN ID and a sensing UE ID.

The sensing service description information may include policy and control information formulated by the SF for the sensing service description information, for example, it may include at least one of the following: sensing measurement mode, sensing service, sensing purpose, sensing measurement signal, and sensing measurement accuracy. For the description of each item, refer to the description in 1a.

The sensing measurement signal may include a specific required sensing measurement quantity (such as RSRP, RSRQ, multipath arrival angle, multipath departure angle, multipath delay, and Doppler frequency).

Optionally, the sensing configuration information may also include a sensing resource, a QoS profile (bandwidth configuration, priority configuration, precision configuration, and the like) of a configured sensing service, a trigger condition for the configured sensing service, reporting information, and the like.

The sensing configuration information may include at least one of sensing UE configuration information and sensing RAN configuration information.

For example, the SF can call the sensing configuration transfer service of the AMF, which includes the sensing configuration information.

Before this step, the SF may obtain the sensing service request through the AF or the UE.

Step 9: The UE and/or RAN performs sensing measurement. The UE and the RAN may perform sensing measurement based on the received sensing configuration information.

Step 10: The UE sends a UE sensing measurement result to the SF through the sensing session. The sensing result may be the sensing measurement signal and the sensing measurement quantity.

The execution subject of the sensing channel establishment method provided in the embodiments of this application may be a sensing channel establishment apparatus. In the embodiments of this application, the sensing channel establishment apparatus provided in the embodiments of this application is described by using the sensing channel establishment method being executed by the sensing channel establishment apparatus as an example.

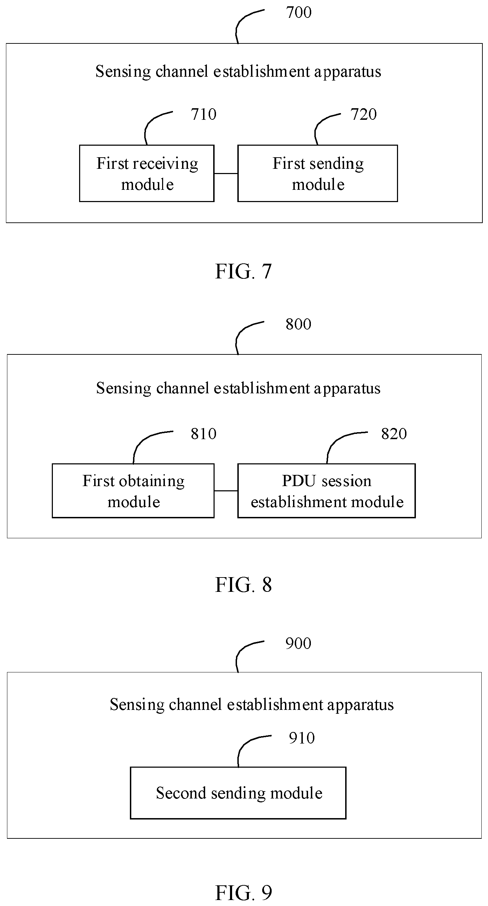

FIG. 7 is a first schematic structural diagram of a sensing channel establishment apparatus according to an embodiment of this application. As shown in FIG. 7, the sensing channel establishment apparatus 700 includes a first receiving module 710 and a first sending module 720.

The first receiving module 710 is configured to receive a first message from a second network element, where the first message includes related information of a sensing device.

The first sending module 720 is configured to send first information based on the first message, where the first information is used to indicate related information of a PDU session expected by a first network element to the sensing device, the first network element includes a network element with a function of providing sensing services, and the PDU session indicated by the first information is used for establishing a sensing connection and/or executing the sensing service.

In this embodiment of this application, the first network element with the function of providing the sensing service obtains the related information of the sensing device, and then indicates the related information of the PDU session expected by the first network element to the sensing device, so as to establish the sensing connection and/or execute the sensing service, thereby improving quality of the communication service.

Optionally, the apparatus further includes:
a second receiving module, configured to receive second information, where the second information is used to indicate that the sensing device has established a first PDU session; where
the first PDU session matches the PDU session expected by the first network element.

Optionally, the first receiving module 710 is specifically configured to:
receive a first message sent by a second network element after selection of the first network element based on first request information, where the first request information is used to trigger the sensing service.

Optionally, the first message is used to request the related information of the PDU session.

Optionally, the first message includes at least one of the following:
identification information of the sensing device;
IP address information of the sensing device; and
first indication information, where the first indication information indicates that the first message is used for requesting related information of a PDU session.

Optionally, the apparatus further includes:
a third receiving module, configured to receive second request information before the first network element receives the first message from the second network element, where the second request information is used to trigger the sensing service; and
a third sending module, configured to send third request information to the second network element based on the second request information, where the third request information is used for requesting to obtain identification information of a sensing device capable of providing sensing services.

The first receiving module includes:
a fifth receiving module, configured to receive the first message that is sent by the second network element after selection of the first network element based on the third request information.

Optionally, the third request information further includes at least one of the following:
description information of the sensing service, where the description information is used for indicating the sensing task; and
requirement information of the sensing service, where the requirement information is used to indicate a requirement of the sensing task.

Optionally, the first information includes at least one of the following:
identification information of the first network element;
identification information of the sensing device;
IP address information of the sensing device;
second indication information, where the second indication information is used to indicate that the PDU session is used to establish a sensing connection and/or perform the sensing service; and
related information of the PDU session expected by the first network element.

Optionally, the related information of the PDU session expected by the first network element includes at least one of the following:
slice information expected by the first network element;
data network name information expected by the first network element;
RAT type information expected by the first network element;
access type (Access Type) information expected by the first network element; and
security-related information expected by the first network element.

Optionally, the first sending module 720 is specifically configured to perform at least one of the following:
sending the first information to the sensing device through the second network element; and
directly sending the first information to the sensing device.

Optionally, the second information includes at least one of the following:
third indication information, where the third indication information is used to indicate that the sensing device has a sensing capability;
fourth indication information, where the fourth indication information indicates that the first PDU session has been established;
IP address information of the first PDU session; and
related information of the sensing capability of the sensing device.

Optionally, the second receiving module is specifically configured to perform any one of the following:
receiving the second information from the sensing device; and
receiving the second information from the sensing device through a second network element.

Optionally, the apparatus further includes:
a fourth sending module, configured to send third information to the second network element after the first network element receives the second information, where the third information is used to indicate at least one of the following:
the first PDU session has been established;
parameter information of the first PDU session;
identification information of the sensing device;
IP address information of the sensing device; and
identification information of the first network element.

Optionally, the parameter information of the first PDU session includes at least one of the following:
IP address information of the first PDU session;
slice information of the first PDU session;
data network name information of the first PDU session;
RAT type information of the first PDU session; and
access type (Access Type) information of the first PDU session.

Optionally, the apparatus further includes:
a fifth sending module, configured to send sensing measurement configuration information to the sensing device after the second information is received by the first network element, where the sensing measurement configuration information is used to indicate sensing measurement and/or is used to indicate start of executing the sensing service. Optionally, the apparatus further includes:
a sixth receiving module, configured to receive a sensing measurement result from the sensing device.

In this embodiment of this application, the first network element with the function of providing the sensing service obtains the related information of the sensing device, and then indicates the related information of the PDU session expected by the first network element to the sensing device, so as to establish the sensing connection and/or execute the sensing service, thereby improving quality of the communication service.

The sensing channel establishment apparatus in this embodiment of this application may be an electronic device, such as an electronic device with an operating system, or a component in the electronic device, such as an integrated circuit or a chip. The electronic device can be a sensing device or other devices than the sensing device. For example, the sensing device may include, but is not limited to, the types of the sensing device 11 listed above, and other devices may be a server, a network attached storage (Network Attached Storage, NAS), and the like. This is not limited in the embodiments of this application.

The sensing channel establishment apparatus provided in this embodiment of this application can implement the processes implemented in the method embodiment in FIG. 2 to FIG. 6, with the same technical effects achieved. To avoid repetition, details are not described herein again.

FIG. 8 is a second schematic structural diagram of a sensing channel establishment apparatus according to an embodiment of this application. As shown in FIG. 8, the sensing channel establishment apparatus 800 includes a first obtaining module 810 and a PDU session establishment module 820.

The first obtaining module 810 is configured to obtain first information, where the first information is used to indicate related information of a PDU session expected by a first network element, the first network element includes a network element with a function of providing sensing services, and the PDU session indicated by the first information is used for establishing a sensing connection and/or executing the sensing service.

The PDU session establishment module 820 is configured to establish a first PDU session based on the first information, where the first PDU session matches the PDU session expected by the first network element.

In this embodiment of this application, the first network element with the function of providing the sensing service obtains the related information of the sensing device, and then the sensing device obtains the related information of the PDU session expected by the first network element, so as to establish the sensing connection and/or execute the sensing service, thereby improving quality of the communication service.

Optionally, the PDU session establishment module 820 is configured to perform at least one of the following:
selecting, based on the first information, a PDU session that conforms to the related information of the PDU session expected by the first network element from existing PDU sessions as the first PDU session; and
creating, based on the first information, a new PDU session that conforms to the related information of the PDU session expected by the first network element as the first PDU session.

Optionally, the first obtaining module 810 is configured to perform at least one of the following:
receiving the first information from the first network element through a second network element; and
directly receiving the first information from the first network element.

Optionally, the apparatus further includes:
a sixth sending module, configured to send second information, where the second information is used to indicate that the sensing device has established the first PDU session.

Optionally, the sixth sending module is configured to perform at least one of the following:
sending the second information to the first network element; and
sending the second information to the first network element through a second network element.

Optionally, the apparatus further includes:
a seventh receiving module, configured to receive sensing measurement configuration information from the first network element, where the sensing measurement configuration information is used to indicate sensing measurement and/or is used to indicate start of executing the sensing service.

Optionally, the apparatus further includes:
a sensing measurement module, configured to perform sensing measurement based on the sensing measurement configuration information to obtain a sensing measurement result.

Optionally, the apparatus further includes:
a seventh sending module, configured to send the sensing measurement result to the first network element.

In this embodiment of this application, the first network element with the function of providing the sensing service obtains the related information of the sensing device, and then the sensing device obtains the related information of the PDU session expected by the first network element, so as to establish the sensing connection and/or execute the sensing service, thereby improving quality of the communication service.

The sensing channel establishment apparatus in this embodiment of this application may be an electronic device, such as an electronic device with an operating system, or a component in the electronic device, such as an integrated circuit or a chip. The electronic device can be a sensing device or other devices than the sensing device. For example, the sensing device may include, but is not limited to, the types of the sensing device 11 listed above, and other devices may be a server, a network attached storage (Network Attached Storage, NAS), and the like. This is not limited in the embodiments of this application.

The sensing channel establishment apparatus provided in this embodiment of this application can implement the processes implemented in the method embodiment in FIG. 2 to FIG. 6, with the same technical effects achieved. To avoid repetition, details are not described herein again.

FIG. 9 is a third schematic structural diagram of a sensing channel establishment apparatus according to an embodiment of this application. As shown in FIG. 9, the sensing channel establishment apparatus 900 includes a second sending module 910.

The second sending module 910 is configured to send a first message to a first network element, where the first message includes related information of a sensing device; the first message is used for triggering transmission of first information; the first information is used to indicate, to the sensing device, related information of a PDU session expected by the first network element; the first network element includes a network element with a function of providing sensing services; and the PDU session indicated by the first information is used for establishing a sensing connection and/or executing the sensing service.

In this embodiment of this application, the second network element sends the related information of the sensing device to the first network element with the function of providing sensing services, so that the first network element indicates the related information of the PDU session expected by the first network element to the sensing device for establishing a sensing connection and/or executing the sensing service, thereby improving quality of the communication service.

Optionally, the first message is used to request the related information of the PDU session.

Optionally, the first message includes at least one of the following:
identification information of the sensing device;
IP address information of the sensing device; and
first indication information, where the first indication information indicates that the first message is used for requesting related information of a PDU session expected by the first network element.

Optionally, the apparatus further includes:
an eighth receiving module, configured to receive first request information before the second network element sends the first message to the first network element, where the first request information is used to trigger the sensing service.

The second sending module 910 is configured to:
select the first network element based on the first request information; and
send the first message to the first network element.

Optionally, the apparatus further includes:
a ninth receiving module, configured to: before the second network element sends the first message to the first network element, receive third request information that is sent by the first network element based on second request information, where the second request information is used for triggering the sensing service, and the third request information is used for requesting identification information of a sensing device capable of providing the sensing service.

The second sending module 910 is configured to:
select the first network element based on the third request information; and
send the first message to the first network element.

Optionally, the third request information further includes at least one of the following:
description information of the sensing service; and
requirement information of the sensing service.

Optionally, the apparatus further includes:
a tenth receiving module, configured to receive the first information from the first network element; and
an eighth sending module, configured to forward the first information to the sensing device.

Optionally, the apparatus further includes:
an eleventh receiving module, configured to receive the second information from the sensing device; and
a ninth sending module, configured to forward the second information to the first network element.

Optionally, the apparatus further includes:
a twelfth receiving module, configured to receive third information from the first network element, where the third information is used to indicate at least one of the following: a first PDU session has been established, parameter information of the first PDU session, identification information of the sensing device, and IP address information of the sensing device; and
a storage module, configured to store a related parameter of the PDU session based on the third information.

In this embodiment of this application, the second network element sends the related information of the sensing device to the first network element with the function of providing sensing services, so that the first network element indicates the related information of the PDU session expected by the first network element to the sensing device for establishing a sensing connection and/or executing the sensing service, thereby improving quality of the communication service.

The sensing channel establishment apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The sensing channel establishment apparatus provided in this embodiment of this application can implement the processes implemented in the method embodiment in FIG. 2 to FIG. 6, with the same technical effects achieved. To avoid repetition, details are not described herein again.

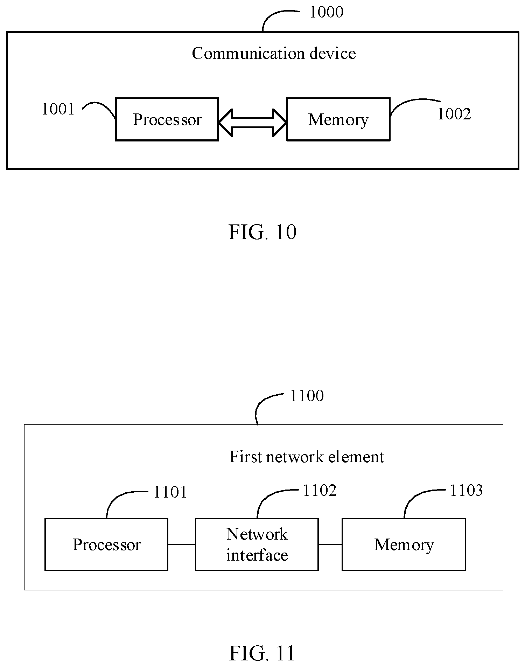

Optionally, FIG. 10 is a schematic structural diagram of a communication device according to an embodiment of this application. Optionally, as shown in FIG. 10, an embodiment of this application further provides a communication device 1000, including a processor 1001 and a memory 1002. A program or instructions capable of running on the processor 1001 are stored in the memory 1002. For example, when the communication device 1000 is a first network element and when the program or the instructions are executed by the processor 1001, the steps of the foregoing embodiments of the sensing channel establishment method corresponding to the first network element are implemented, with the same technical effects achieved. When the communication device 1000 is a sensing device and when the program or instructions are executed by the processor 1001, the steps of the foregoing embodiments of the sensing channel establishment method are implemented, with the same technical effects achieved. When the communication device 1000 is a second network element and when the program or instructions are executed by the processor 1001, the steps of the foregoing embodiments of the sensing channel establishment method corresponding to the second network element are implemented, with the same technical effects achieved. To avoid repetition, details are not described herein again.

An embodiment of this application further provides a first network element, including a processor and a communication interface, where the communication interface is configured to:
receive a first message from a second network element, where the first message includes related information of a sensing device; and
send first information based on the first message, where the first information is used to indicate related information of a PDU session expected by the first network element to the sensing device, the first network element includes a network element with a function of providing sensing services, and the PDU session indicated by the first information is used for establishing a sensing connection and/or executing the sensing service.

The first network element embodiment corresponds to the foregoing first network element method embodiment, and the implementation processes and implementations of the foregoing method embodiments can be applied to the first network element embodiment, with the same technical effects achieved.

Specifically, an embodiment of this application further provides a first network element. FIG. 11 is a schematic diagram of a hardware structure of a first network element for implementing an embodiment of this application. As shown in FIG. 11, the first network element 1100 includes a processor 1101, a network interface 1102, and a memory 1103. The network interface 1102 is, for example, a common public radio interface (common public radio interface, CPRI).

Specifically, the first network element 1100 according to this embodiment of the present invention further includes instructions or programs stored in the memory 1103 and capable of running on the processor 1101, and the processor 1101 calls the instructions or programs in the memory 1103 to execute the methods performed by the modules shown in FIG. 7, with the same technical effects achieved. To avoid repetition, details are not described herein again.

The network interface 1102 is configured to:
receive a first message from a second network element, where the first message includes related information of a sensing device; and
send first information based on the first message, where the first information is used to indicate related information of a PDU session expected by the first network element to the sensing device, the first network element includes a network element with a function of providing sensing services, and the PDU session indicated by the first information is used for establishing a sensing connection and/or executing the sensing service.

Optionally, the network interface 1102 is further configured to:
receive second information, where the second information is used to indicate that the sensing device has established a first PDU session; where
the first PDU session matches the PDU session expected by the first network element.

Optionally, the network interface 1102 is configured to:
receive, for the first network element, a first message sent by a second network element after selection of the first network element based on first request information, where the first request information is used to trigger the sensing service.

Optionally, the first message is used to request the related information of the PDU session.

Optionally, the first message includes at least one of the following:
identification information of the sensing device;
IP address information of the sensing device; and
first indication information, where the first indication information indicates that the first message is used for requesting related information of a PDU session.

Optionally, the network interface 1102 is configured to:
receive second request information before the first network element receives the first message from the second network element, where the second request information is used to trigger the sensing service; and
send third request information to the second network element based on the second request information, where the third request information is used for requesting to obtain related information of a sensing device capable of providing sensing services.

The network interface 1102 is configured to:
receive the first message that is sent by the second network element after selection of the first network element based on the third request information.

Optionally, the third request information further includes at least one of the following:
description information of the sensing service, where the description information is used for indicating the sensing task; and
requirement information of the sensing service, where the requirement information is used to indicate a requirement of the sensing task.

Optionally, the first information includes at least one of the following:
identification information of the first network element;
identification information of the sensing device;
IP address information of the sensing device;
second indication information, where the second indication information is used to indicate that the PDU session is used to establish a sensing connection and/or perform the sensing service; and
related information of the PDU session expected by the first network element.

Optionally, the related information of the PDU session expected by the first network element includes at least one of the following:
slice information expected by the first network element;
data network name information expected by the first network element;
RAT type information expected by the first network element;
access type (Access Type) information expected by the first network element; and
security-related information expected by the first network element.

Optionally, the network interface 1102 is configured to perform at least one of the following:
sending the first information to the sensing device through the second network element; and
directly sending the first information to the sensing device.

Optionally, the second information includes at least one of the following:
third indication information, where the third indication information is used to indicate that the sensing device has a sensing capability;
fourth indication information, where the fourth indication information indicates that the first PDU session has been established;
IP address information of the first PDU session; and
related information of the sensing capability of the sensing device.

Optionally, the network interface 1102 is configured to perform at least one of the following:
receiving the second information from the sensing device; and
receiving the second information from the sensing device through a second network element.

Optionally, the network interface 1102 is configured to:
send third information to the second network element after the first network element receives the second information, where the third information is used to indicate at least one of the following:
the first PDU session has been established;
parameter information of the first PDU session;
identification information of the sensing device;
IP address information of the sensing device; and
identification information of the first network element.

Optionally, the parameter information of the first PDU session includes at least one of the following:
IP address information of the first PDU session;
slice information of the first PDU session;
data network name information of the first PDU session;
RAT type information of the first PDU session; and
access type (Access Type) information of the first PDU session.

Optionally, the network interface 1102 is configured to:
send sensing measurement configuration information to the sensing device after the second information is received by the first network element, where the sensing measurement configuration information is used to indicate sensing measurement and/or is used to indicate start of executing the sensing service. Optionally, the network interface 1102 is further configured to:
receive a sensing measurement result from the sensing device.

An embodiment of this application further provides a sensing device, including a processor and a communication interface, where the communication interface is configured to: obtain first information, where the first information is used to indicate related information of a PDU session expected by a first network element, the first network element includes a network element with a function of providing sensing services, and the PDU session indicated by the first information is used for establishing a sensing connection and/or executing the sensing service.

The processor is configured to establish a first PDU session based on the first information, where the first PDU session matches the PDU session expected by the first network element.

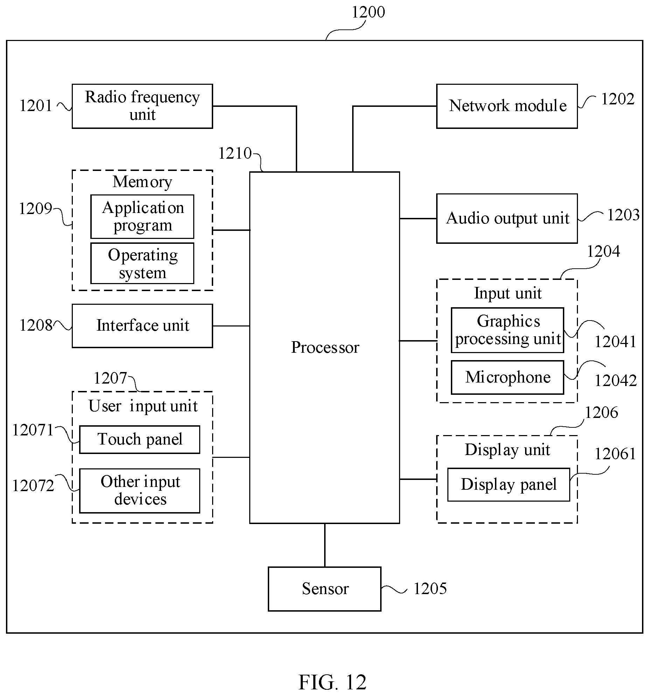

The sensing device embodiment corresponds to the foregoing method embodiment on the sensing device side, and the implementation processes and implementations of the foregoing method embodiment can be applied to the sensing device embodiment, with the same technical effects achieved. Specifically, FIG. 12 is a schematic diagram of a hardware structure of a sensing device implementing an embodiment of this application; and
The sensing device 1200 includes but is not limited to at least part of components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art can understand that the sensing device 1200 may further include a power supply (such as a battery) for supplying power to the components. The power supply may be logically connected to the processor 1210 through a power management system. In this way, functions such as charge management, discharge management, and power consumption management are implemented by using the power management system. The structure of the sensing device shown in FIG. 12 does not constitute a limitation on the sensing device. The sensing device may include more or fewer components than those shown in the figure, or a combination of some components, or components disposed differently. Details are not described herein again.

It can be understood that in this embodiment of this application, the input unit 1204 may include a graphics processing unit (Graphics Processing Unit, GPU) 12041 and a microphone 12042. The graphics processing unit 12041 processes image data of a still picture or video obtained by an image capture apparatus (such as a camera) in a video capture mode or an image capture mode. The display unit 1206 may include a display panel 12061, and the display panel 12061 may be configured in a form of a liquid crystal display, an organic light-emitting diode, and the like. The user input unit 1207 includes at least one of a touch panel 12071 and other input devices 12072. The touch panel 12071 is also referred to as a touchscreen. The touch panel 12071 may include two parts: a touch detection apparatus and a touch controller. The other input devices 12072 may include but are not limited to a physical keyboard, a function key (such as a volume control key or a power on/off key), a trackball, a mouse, a joystick, and the like. Details are not described herein.

In this embodiment of this application, after receiving downlink data from a network-side device, the radio frequency unit 1201 sends the downlink data to the processor 1210 for processing; and the radio frequency unit 1201 also sends uplink data to the network-side device. Generally, the radio frequency unit 1201 includes, but is not limited to, an antenna, an amplifier, a transceiver, a coupler, a low noise amplifier, a duplexer, and the like.

The memory 1209 may be configured to store software programs or instructions and various data. The memory 1209 may mainly include a first storage area for storing programs or instructions and a second storage area for storing data, where the first storage area may store an operating system, an application program or instructions required by at least one function (for example, an audio playing function and an image playing function), and the like. In addition, the memory 1209 may be a volatile memory or a non-volatile memory, or the memory 1209 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 1209 described in this embodiment this application includes but is not limited to these and any other appropriate types of memories.

The processor 1210 may include one or more processing units. Optionally, the processor 1210 integrates an application processor and a modem processor. The application processor mainly processes operations related to an operating system, a user interface, an application program, and the like. The modem processor mainly processes wireless communication signals, for example, a baseband processor. It should be understood that alternatively, the modem processor may not be integrated into the processor 1210.

The radio frequency unit 1201 is configured to:
obtain first information, where the first information is used to indicate related information of a PDU session expected by a first network element, the first network element includes a network element with a function of providing sensing services, and the PDU session indicated by the first information is used for establishing a sensing connection and/or executing the sensing service.

The processor 1210 is configured to:
establish a first PDU session based on the first information, where the first PDU session matches the PDU session expected by the first network element.

Optionally, the processor 1210 is configured to perform at least one of the following:
selecting, based on the first information, a PDU session that conforms to the related information of the PDU session expected by the first network element from existing PDU sessions as the first PDU session; and
creating, based on the first information, a new PDU session that conforms to the related information of the PDU session expected by the first network element as the first PDU session.

Optionally, the radio frequency unit 1201 is configured to perform at least one of the following:
receiving the first information from the first network element through a second network element; and
directly receiving the first information from the first network element.

Optionally, the radio frequency unit 1201 is further configured to:
send second information, where the second information is used to indicate that the sensing device has established the first PDU session.

Optionally, the radio frequency unit 1201 is configured to perform at least one of the following:
sending the second information to the first network element; and
sending the second information to the first network element through a second network element.

Optionally, the radio frequency unit 1201 is further configured to:
receive sensing measurement configuration information from the first network element, where the sensing measurement configuration information is used to indicate sensing measurement and/or is used to indicate start of executing the sensing service.

Optionally, the processor 1210 is further configured to:
perform sensing measurement based on the sensing measurement configuration information to obtain a sensing measurement result.

Optionally, the radio frequency unit 1201 is further configured to:
send the sensing measurement result to the first network element.

An embodiment of this application further provides a second network element, including a processor and a communication interface, where the communication interface is configured to send a first message to a first network element, where the first message includes related information of a sensing device; the first message is used for triggering transmission of first information; the first information is used to indicate, to a sensing device, related information of a PDU session expected by the first network element; the first network element includes a network element with a function of providing sensing services; and the PDU session indicated by the first information is used for establishing a sensing connection and/or executing the sensing service.

The second network element embodiment corresponds to the foregoing second network element method embodiment, and the implementation processes and implementations of the foregoing method embodiments can be applied to the second network element embodiment, with the same technical effects achieved.

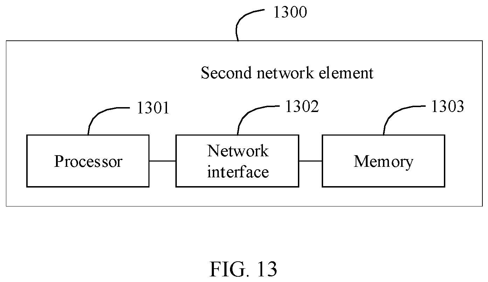

Specifically, an embodiment of this application further provides a second network element. FIG. 13 is a schematic diagram of a hardware structure of a second network element for implementing an embodiment of this application. As shown in FIG. 13, the second network element 1300 includes a processor 1301, a network interface 1302, and a memory 1303. The network interface 1302 is, for example, a common public radio interface (CPRI).

Specifically, the second network element 1300 according to this embodiment of the present invention further includes instructions or programs stored in the memory 1303 and capable of running on the processor 1301, and the processor 1301 calls the instructions or programs in the memory 1303 to execute the methods performed by the modules shown in FIG. 9, with the same technical effects achieved. To avoid repetition, details are not described herein again.

The network interface 1302 is configured to:
send a first message to a first network element, where the first message includes related information of a sensing device; the first message is used for triggering transmission of first information; the first information is used to indicate, to the sensing device, related information of a PDU session expected by the first network element; the first network element includes a network element with a function of providing sensing services; and the PDU session indicated by the first information is used for establishing a sensing connection and/or executing the sensing service.

Optionally, the first message is used to request the related information of the PDU session.

Optionally, the first message includes at least one of the following:
identification information of the sensing device;
IP address information of the sensing device; and
first indication information, where the first indication information indicates that the first message is used for requesting related information of a PDU session expected by the first network element.

Optionally, the network interface 1302 is configured to:
receive first request information before the second network element sends the first message to the first network element, where the first request information is used to trigger the sensing service.

The processor 1301 is configured to:
select the first network element based on the first request information.

The network interface 1302 is configured to:
send the first message to the first network element.

Optionally, the network interface 1302 is configured to:
before the second network element sends the first message to the first network element, receive third request information that is sent by the first network element based on second request information, where the second request information is used for triggering the sensing service, and the third request information is used for requesting identification information of a sensing device capable of providing the sensing service.

The processor 1301 is configured to:
select the first network element based on the third request information.

The network interface 1302 is configured to:
send the first message to the first network element.

Optionally, the third request information further includes at least one of the following:
description information of the sensing service; and
requirement information of the sensing service.

Optionally, the network interface 1302 is further configured to:
receive first information from the first network element; and
forward the first information to the sensing device.

Optionally, the network interface 1302 is configured to:
receive second information from the sensing device; and
forward the second information to the first network element.

Optionally, the network interface 1302 is configured to:
receive third information from the first network element, where the third information is used to indicate at least one of the following: a first PDU session has been established, parameter information of the first PDU session, identification information of the sensing device, and IP address information of the sensing device.

The processor 1301 is configured to store a related parameter of the PDU session based on the third information.

An embodiment of this application further provides a readable storage medium, where the readable storage medium stores a program or instructions, and when the program or the instructions are executed by a processor, the processes of the foregoing embodiments of the sensing channel establishment method are implemented, with the same technical effects achieved. To avoid repetition, details are not described herein again.

The processor is the processor in the sensing device in the foregoing embodiment. The readable storage medium includes computer readable storage medium, such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes of the foregoing embodiments of the sensing channel establishment method, with the same technical effect achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes of the foregoing embodiments of the sensing channel establishment method, with the same technical effects achieved. To avoid repetition, details are not repeated herein.

An embodiment of this application further provides a sensing channel establishment system, including a first network element, a sensing device, and a second network element, where the first network element can be configured to execute the steps of the sensing channel establishment method described above, the sensing device can be configured to execute the steps of the sensing channel establishment method described above, and the second network element can be configured to execute the steps of the sensing channel establishment method described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A sensing channel establishment method, comprising:
receiving, by a first network element, a first message from a second network element, wherein the first message comprises related information of a sensing device; and
sending, by the first network element, first information based on the first message, wherein the first information is used to indicate, to the sensing device, related information of a PDU session expected by the first network element, the first network element comprises a network element with a function of providing sensing services, and the PDU session indicated by the first information is used for establishing a sensing connection and/or executing the sensing service.

2. The sensing channel establishment method according to claim 1, wherein the method further comprises:
receiving, by the first network element, second information, wherein the second information is used to indicate that the sensing device has established a first PDU session; wherein
the first PDU session matches the PDU session expected by the first network element.

3. The sensing channel establishment method according to claim 1 or 2, wherein the receiving, by a first network element, a first message from a second network element comprises:
receiving, by the first network element, a first message sent by a second network element after selection of the first network element based on first request information, wherein the first request information is used to trigger the sensing service.

4. The sensing channel establishment method according to any one of claims 1 to 3, wherein the first message is used for requesting related information of a PDU session; or
the first message comprises at least one of the following:
identification information of the sensing device;
IP address information of the sensing device; and
first indication information, wherein the first indication information indicates that the first message is used for requesting related information of a PDU session.

5. The sensing channel establishment method according to claim 1, wherein before the receiving, by a first network element a first message from a second network element, the method further comprises:
receiving, by the first network element, second request information, wherein the second request information is used to trigger the sensing service; and
sending, by the first network element, third request information to the second network element based on the second request information, wherein the third request information is used for requesting to obtain related information of a sensing device capable of providing sensing services; wherein
the receiving, by a first network element a first message from a second network element comprises:
receiving, by the first network element, the first message that is sent by the second network element after selection of the first network element based on the third request information,
wherein the third request information further comprises at least one of the following:
description information of the sensing service, wherein the description information is used for indicating the sensing task; and
requirement information of the sensing service, wherein the requirement information is used to indicate a requirement of the sensing task.

6. The sensing channel establishment method according to any one of claims 1 to 5, wherein the first information comprises at least one of the following:
identification information of the first network element;
identification information of the sensing device;
IP address information of the sensing device;
second indication information, wherein the second indication information is used to indicate that the PDU session is used to establish a sensing connection and/or perform the sensing service; and
related information of the PDU session expected by the first network element.

7. The sensing channel establishment method according to any one of claims 1 to 6, wherein the related information of the PDU session expected by the first network element comprises at least one of the following:
slice information expected by the first network element;
data network name information expected by the first network element;
RAT type information expected by the first network element;
access type (Access Type) information expected by the first network element; and
security-related information expected by the first network element.

8. The sensing channel establishment method according to any one of claims 1 to 7, wherein the sending the first information comprises at least one of the following:
sending, by the first network element, the first information to the sensing device through the second network element; and
directly sending, by the first network element, the first information to the sensing device.

9. The sensing channel establishment method according to any one of claims 2 to 8, wherein the second information comprises at least one of the following:
third indication information, wherein the third indication information is used to indicate that the sensing device has a sensing capability;
fourth indication information, wherein the fourth indication information indicates that the first PDU session has been established;
IP address information of the first PDU session; and
related information of the sensing capability of the sensing device.

10. The sensing channel establishment method according to any one of claims 1 to 9, wherein the receiving, by the first network element, second information comprises at least one of the following:
receiving, by the first network element, the second information from the sensing device; and
receiving, by the first network element, the second information from the sensing device through the second network element.

11. The sensing channel establishment method according to any one of claims 1 to 10, wherein after the receiving, by the first network element, second information, the method further comprises:
sending, by the first network element, third information to the second network element, wherein the third information is used to indicate at least one of the following:
the first PDU session has been established;
parameter information of the first PDU session;
identification information of the sensing device;
IP address information of the sensing device; and
identification information of the first network element,
wherein the parameter information of the first PDU session comprises at least one of the following:
IP address information of the first PDU session;
slice information of the first PDU session;
data network name information of the first PDU session;
RAT type information of the first PDU session; and
access type (Access Type) information of the first PDU session.

12. A sensing channel establishment method, comprising:
obtaining, by a sensing device, first information, wherein the first information is used to indicate related information of a PDU session expected by a first network element, the first network element comprises a network element with a function of providing sensing services, and the PDU session indicated by the first information is used for establishing a sensing connection and/or executing the sensing service; and
establishing, by the sensing device, a first PDU session based on the first information, wherein the first PDU session matches the PDU session expected by the first network element.

13. The sensing channel establishment method according to claim 12, wherein the establishing, by the sensing device, a first PDU session based on the first information comprises at least one of the following:
selecting, by the sensing device based on the first information, a PDU session that conforms to the related information of the PDU session expected by the first network element from existing PDU sessions as the first PDU session; and
creating, by the sensing device based on the first information, a new PDU session that conforms to the related information of the PDU session expected by the first network element as the first PDU session.

14. A sensing channel establishment method, comprising:
sending, by a second network element, a first message to a first network element, wherein the first message comprises related information of a sensing device; the first message is used for triggering transmission of first information; the first information is used to indicate, to the sensing device, related information of a PDU session expected by the first network element; the first network element comprises a network element with a function of providing sensing services; and the PDU session indicated by the first information is used for establishing a sensing connection and/or executing the sensing service.

15. An electronic device, comprising a processor and a memory, wherein the memory stores a program or instructions capable of running on the processor, and the program or instructions, when executed by the processor, implement the sensing channel establishment method according to any one of claims 1 to 14.

## Patentansprüche

1. Erfassungskanal-Einrichtungsverfahren, umfassend:
Empfangen, durch ein erstes Netzelement, einer ersten Nachricht von einem zweiten Netzelement, wobei die erste Nachricht zugehörige Information einer Erfassungsvorrichtung umfasst; und
Senden, durch das erste Netzelement, von erster Information basierend auf der ersten Nachricht, wobei die erste Information verwendet wird, um der Erfassungsvorrichtung zugehörige Information einer vom ersten Netzelement erwarteten PDU-Sitzung anzuzeigen, wobei das erste Netzelement ein Netzelement mit einer Funktion des Bereitstellens von Erfassungsdiensten umfasst, und die von der ersten Information angezeigte PDU-Sitzung zum Aufbauen einer Erfassungsverbindung und/oder Ausführen des Erfassungsdienstes verwendet wird.

2. Erfassungskanal-Einrichtungsverfahren nach Anspruch 1, wobei das Verfahren ferner umfasst:
Empfangen, durch das erste Netzelement, von zweiter Information, wobei die zweite Information verwendet wird, um anzuzeigen, dass die Erfassungsvorrichtung eine erste PDU-Sitzung aufgebaut hat; wobei
die erste PDU-Sitzung der vom ersten Netzelement erwarteten PDU-Sitzung entspricht.

3. Erfassungskanal-Einrichtungsverfahren nach Anspruch 1 oder 2, wobei das Empfangen, durch ein erstes Netzelement, einer ersten Nachricht von einem zweiten Netzelement umfasst:
Empfangen, durch das erste Netzelement, einer ersten Nachricht, die von einem zweiten Netzelement nach Auswahl des ersten Netzelements basierend auf erster Anfrageinformation gesendet wird, wobei die erste Anfrageinformation verwendet wird, um den Erfassungsdienst auszulösen.

4. Erfassungskanal-Einrichtungsverfahren nach einem der Ansprüche 1 bis 3, wobei die erste Nachricht zum Anfordern von zugehöriger Information einer PDU-Sitzung verwendet wird; oder
die erste Nachricht mindestens eines der Folgenden umfasst:
Identifikationsinformation der Erfassungsvorrichtung;
IP-Adressinformation der Erfassungsvorrichtung; und
erste Anzeigeinformation, wobei die erste Anzeigeinformation anzeigt, dass die erste Nachricht zum Anfordern von zugehöriger Information einer PDU-Sitzung verwendet wird.

5. Erfassungskanal-Einrichtungsverfahren nach Anspruch 1, wobei das Verfahren vor dem Empfangen, durch ein erstes Netzelement, einer ersten Nachricht von einem zweiten Netzelement ferner umfasst:
Empfangen, durch das erste Netzelement, von zweiter Anfrageinformation, wobei die zweite Anfrageinformation verwendet wird, um den Erfassungsdienst auszulösen; und
Senden, durch das erste Netzelement, von dritter Anfrageinformation an das zweite Netzelement basierend auf der zweiten Anfrageinformation, wobei die dritte Anfrageinformation zum Anfordern des Erlangens von zugehöriger Information einer Erfassungsvorrichtung verwendet wird, das in der Lage ist, Erfassungsdienste bereitzustellen; wobei
das Empfangen, durch ein erstes Netzelement, einer ersten Nachricht von einem zweiten Netzelement umfasst:
Empfangen, durch das erste Netzelement, der ersten Nachricht, die vom zweiten Netzelement nach Auswahl des ersten Netzelements basierend auf der dritten Anfrageinformation gesendet wird,
wobei die dritte Anfrageinformation ferner mindestens eines der Folgenden umfasst:
Beschreibungsinformation des Erfassungsdienstes, wobei die Beschreibungsinformation zum Anzeigen der Erfassungsaufgabe verwendet wird; und
Anforderungsinformation des Erfassungsdienstes, wobei die Anforderungsinformation verwendet wird, um eine Anforderung der Erfassungsaufgabe anzuzeigen.

6. Erfassungskanal-Einrichtungsverfahren nach einem der Ansprüche 1 bis 5, wobei die erste Information mindestens eines der Folgenden umfasst:
Identifikationsinformation des ersten Netzelements;
Identifikationsinformation der Erfassungsvorrichtung;
IP-Adressinformation der Erfassungsvorrichtung;
zweite Anzeigeinformation, wobei die zweite Anzeigeinformation verwendet wird, um anzuzeigen, dass die PDU-Sitzung zum Aufbauen einer Erfassungsverbindung und/oder Durchführen des Erfassungsdienstes verwendet wird; und
zugehörige Information der vom ersten Netzelement erwarteten PDU-Sitzung.

7. Erfassungskanal-Einrichtungsverfahren nach einem der Ansprüche 1 bis 6, wobei die zugehörige Information der vom ersten Netzelement erwarteten PDU-Sitzung mindestens eines der Folgenden umfasst:
vom ersten Netzelement erwartete Slice-Information;
vom ersten Netzelement erwartete Datennetzname-Information;
vom ersten Netzelement erwartete RAT-Typ-Information;
vom ersten Netzelement erwartete Zugriffstyp-Information (Access Type); und
vom ersten Netzelement erwartete sicherheitsbezogene Information.

8. Erfassungskanal-Einrichtungsverfahren nach einem der Ansprüche 1 bis 7, wobei das Senden der ersten Information mindestens eines der Folgenden umfasst:
Senden, durch das erste Netzelement, der ersten Information an die Erfassungsvorrichtung durch das zweite Netzelement; und
direktes Senden, durch das erste Netzelement, der ersten Information an die Erfassungsvorrichtung.

9. Erfassungskanal-Einrichtungsverfahren nach einem der Ansprüche 2 bis 8, wobei die zweite Information mindestens eines der Folgenden umfasst:
dritte Anzeigeinformation, wobei die dritte Anzeigeinformation verwendet wird, um anzuzeigen, dass die Erfassungsvorrichtung eine Erfassungsfähigkeit aufweist;
vierte Anzeigeinformation, wobei die vierte Anzeigeinformation anzeigt, dass die erste PDU-Sitzung aufgebaut wurde;
IP-Adressinformation der ersten PDU-Sitzung; und
zugehörige Information der Erfassungsfähigkeit der Erfassungsvorrichtung.

10. Erfassungskanal-Einrichtungsverfahren nach einem der Ansprüche 1 bis 9, wobei das Empfangen, durch das erste Netzelement, von zweiter Information mindestens eines der Folgenden umfasst:
Empfangen, durch das erste Netzelement, der zweiten Information von der Erfassungsvorrichtung; und
Empfangen, durch das erste Netzelement, der zweiten Information von der Erfassungsvorrichtung durch das zweite Netzelement.

11. Erfassungskanal-Einrichtungsverfahren nach einem der Ansprüche 1 bis 10, wobei das Verfahren nach dem Empfangen, durch das erste Netzelement, von zweiter Information ferner umfasst:
Senden, durch das erste Netzelement, von dritter Information an das zweite Netzelement, wobei die dritte Information verwendet wird, um mindestens eines der Folgenden anzuzeigen:
die erste PDU-Sitzung wurde aufgebaut;
Parameterinformation der ersten PDU-Sitzung;
Identifikationsinformation der Erfassungsvorrichtung;
IP-Adressinformation der Erfassungsvorrichtung; und
Identifikationsinformation des ersten Netzelements,
wobei die Parameterinformation der ersten PDU-Sitzung mindestens eines der Folgenden umfasst:
IP-Adressinformation der ersten PDU-Sitzung;
Slice-Information der ersten PDU-Sitzung;
Datennetzname-Information der ersten PDU-Sitzung;
RAT-Typ-Information der ersten PDU-Sitzung; und
Zugriffstyp-Information (Access Type) der ersten PDU-Sitzung.

12. Erfassungskanal-Einrichtungsverfahren, umfassend:
Erlangen, durch eine Erfassungsvorrichtung, von erster Information, wobei die erste Information verwendet wird, um zugehörige Information einer von einem ersten Netzelement erwarteten PDU-Sitzung anzuzeigen, wobei das erste Netzelement ein Netzelement mit einer Funktion des Bereitstellens von Erfassungsdiensten umfasst, und die von der ersten Information angezeigte PDU-Sitzung zum Aufbauen einer Erfassungsverbindung und/oder Ausführen des Erfassungsdienstes verwendet wird; und
Aufbauen, durch die Erfassungsvorrichtung, einer ersten PDU-Sitzung basierend auf der ersten Information, wobei die erste PDU-Sitzung der vom ersten Netzelement erwarteten PDU-Sitzung entspricht.

13. Erfassungskanal-Einrichtungsverfahren nach Anspruch 12, wobei das Aufbauen, durch die Erfassungsvorrichtung, einer ersten PDU-Sitzung basierend auf der ersten Information mindestens eines der Folgenden umfasst:
Auswählen, durch die Erfassungsvorrichtung basierend auf der ersten Information, einer PDU-Sitzung, die der zugehörigen Information der vom ersten Netzelement erwarteten PDU-Sitzung entspricht, aus bestehenden PDU-Sitzungen als die erste PDU-Sitzung; und
Erstellen, durch die Erfassungsvorrichtung basierend auf der ersten Information, einer neuen PDU-Sitzung, die der zugehörigen Information der vom ersten Netzelement erwarteten PDU-Sitzung entspricht, als die erste PDU-Sitzung.

14. Erfassungskanal-Einrichtungsverfahren, umfassend:
Senden, durch ein zweites Netzelement, einer ersten Nachricht an ein erstes Netzelement, wobei die erste Nachricht zugehörige Information einer Erfassungsvorrichtung umfasst;
die erste Nachricht zum Auslösen der Übertragung von erster Information verwendet wird; die erste Information verwendet wird, um der Erfassungsvorrichtung zugehörige Information einer vom ersten Netzelement erwarteten PDU-Sitzung anzuzeigen; das erste Netzelement ein Netzelement mit einer Funktion des Bereitstellens von Erfassungsdiensten umfasst;
und die von der ersten Information angezeigte PDU-Sitzung zum Aufbauen einer Erfassungsverbindung und/oder Ausführen des Erfassungsdienstes verwendet wird.

15. Elektronische Vorrichtung, umfassend einen Prozessor und einen Speicher, wobei der Speicher ein Programm oder Anweisungen speichert, die auf dem Prozessor ausführbar sind, und das Programm oder die Anweisungen, wenn durch den Prozessor ausgeführt, das Erfassungskanal-Einrichtungsverfahren nach einem der Ansprüche 1 bis 14 implementieren.

## Revendications

1. Procédé d'établissement de canal de détection, comprenant :
la réception, par un premier élément de réseau, d'un premier message provenant d'un second élément de réseau, dans lequel le premier message comprend des informations associées à un dispositif de détection ; et
l'envoi, par le premier élément de réseau, de premières informations sur la base du premier message, dans lesquelles les premières informations sont utilisées pour indiquer, au dispositif de détection, des informations associées à une session PDU attendue par le premier élément de réseau, le premier élément de réseau comprend un élément de réseau ayant une fonction de fourniture de services de détection, et la session PDU indiquée par les premières informations est utilisée pour établir une connexion de détection et/ou exécuter le service de détection.

2. Procédé d'établissement de canal de détection selon la revendication 1, dans lequel le procédé comprend en outre :
la réception, par le premier élément de réseau, de deuxièmes informations, dans lesquelles les deuxièmes informations sont utilisées pour indiquer que le dispositif de détection a établi une première session PDU ; dans lequel
la première session PDU correspond à la session PDU attendue par le premier élément de réseau.

3. Procédé d'établissement de canal de détection selon la revendication 1 ou 2, dans lequel la réception, par un premier élément de réseau, d'un premier message provenant d'un second élément de réseau comprend :
la réception, par le premier élément de réseau, d'un premier message envoyé par un second élément de réseau après sélection du premier élément de réseau sur la base de premières informations de demande, dans lesquelles les premières informations de demande sont utilisées pour déclencher le service de détection.

4. Procédé d'établissement de canal de détection selon l'une quelconque des revendications 1 à 3, dans lequel le premier message est utilisé pour demander des informations associées à une session PDU ; ou
le premier message comprend au moins l'un des éléments suivants :
des informations d'identification du dispositif de détection ;
des informations d'adresse IP du dispositif de détection ; et
des premières informations d'indication, dans lesquelles les premières informations d'indication indiquent que le premier message est utilisé pour demander des informations associées à une session PDU.

5. Procédé d'établissement de canal de détection selon la revendication 1, dans lequel avant la réception, par un premier élément de réseau, d'un premier message provenant d'un second élément de réseau, le procédé comprend en outre :
la réception, par le premier élément de réseau, de deuxièmes informations de demande, dans lesquelles les deuxièmes informations de demande sont utilisées pour déclencher le service de détection ; et
l'envoi, par le premier élément de réseau, de troisièmes informations de demande au second élément de réseau sur la base des deuxièmes informations de demande, dans lesquelles les troisièmes informations de demande sont utilisées pour demander l'obtention d'informations associées à un dispositif de détection capable de fournir des services de détection ; dans lequel
la réception, par un premier élément de réseau, d'un premier message provenant d'un second élément de réseau comprend :
la réception, par le premier élément de réseau, du premier message qui est envoyé par le second élément de réseau après sélection du premier élément de réseau sur la base des troisièmes informations de demande,
dans lesquelles les troisièmes informations de demande comprennent en outre au moins l'un des éléments suivants :
des informations de description du service de détection, dans lesquelles les informations de description sont utilisées pour indiquer la tâche de détection ; et
des informations d'exigence du service de détection, dans lesquelles les informations d'exigence sont utilisées pour indiquer une exigence de la tâche de détection.

6. Procédé d'établissement de canal de détection selon l'une quelconque des revendications 1 à 5, dans lesquelles les premières informations comprennent au moins l'un des éléments suivants :
des informations d'identification du premier élément de réseau ;
des informations d'identification du dispositif de détection ;
des informations d'adresse IP du dispositif de détection ;
des deuxièmes informations d'indication, dans lesquelles les deuxièmes informations d'indication sont utilisées pour indiquer que la session PDU est utilisée pour établir une connexion de détection et/ou effectuer le service de détection ; et
des informations associées à la session PDU attendue par le premier élément de réseau.

7. Procédé d'établissement de canal de détection selon l'une quelconque des revendications 1 à 6, dans lesquelles les informations associées à la session PDU attendue par le premier élément de réseau comprennent au moins l'un des éléments suivants :
des informations de tranche attendues par le premier élément de réseau ;
des informations de nom de réseau de données attendues par le premier élément de réseau ;
des informations de type RAT attendues par le premier élément de réseau ;
des informations de type d'accès (Access Type) attendues par le premier élément de réseau ; et
des informations liées à la sécurité attendues par le premier élément de réseau.

8. Procédé d'établissement de canal de détection selon l'une quelconque des revendications 1 à 7, dans lequel l'envoi des premières informations comprend au moins l'un des éléments suivants :
l'envoi, par le premier élément de réseau, des premières informations au dispositif de détection par l'intermédiaire du second élément de réseau ; et
l'envoi direct, par le premier élément de réseau, des premières informations au dispositif de détection.

9. Procédé d'établissement de canal de détection selon l'une quelconque des revendications 2 à 8, dans lesquelles les deuxièmes informations comprennent au moins l'un des éléments suivants :
des troisièmes informations d'indication, dans lesquelles les troisièmes informations d'indication sont utilisées pour indiquer que le dispositif de détection possède une capacité de détection ;
des quatrièmes informations d'indication, dans lesquelles les quatrièmes informations d'indication indiquent que la première session PDU a été établie ;
des informations d'adresse IP de la première session PDU ; et
des informations associées à la capacité de détection du dispositif de détection.

10. Procédé d'établissement de canal de détection selon l'une quelconque des revendications 1 à 9, dans lequel la réception, par le premier élément de réseau, de deuxièmes informations comprend au moins l'un des éléments suivants :
la réception, par le premier élément de réseau, des deuxièmes informations provenant du dispositif de détection ; et
la réception, par le premier élément de réseau, des deuxièmes informations provenant du dispositif de détection par l'intermédiaire du second élément de réseau.

11. Procédé d'établissement de canal de détection selon l'une quelconque des revendications 1 à 10, dans lequel après la réception, par le premier élément de réseau, de deuxièmes informations, le procédé comprend en outre :
l'envoi, par le premier élément de réseau, de troisièmes informations au second élément de réseau, dans lesquelles les troisièmes informations sont utilisées pour indiquer au moins l'un des éléments suivants :
la première session PDU a été établie ;
des informations de paramètre de la première session PDU ;
des informations d'identification du dispositif de détection ;
des informations d'adresse IP du dispositif de détection ; et
des informations d'identification du premier élément de réseau,
dans lesquelles les informations de paramètre de la première session PDU comprennent au moins l'un des éléments suivants :
des informations d'adresse IP de la première session PDU ;
des informations de tranche de la première session PDU ;
des informations de nom de réseau de données de la première session PDU ;
des informations de type RAT de la première session PDU ; et
des informations de type d'accès (Access Type) de la première session PDU.

12. Procédé d'établissement de canal de détection, comprenant :
l'obtention, par un dispositif de détection, de premières informations, dans lesquelles les premières informations sont utilisées pour indiquer des informations associées à une session PDU attendue par un premier élément de réseau, le premier élément de réseau comprend un élément de réseau ayant une fonction de fourniture de services de détection, et la session PDU indiquée par les premières informations est utilisée pour établir une connexion de détection et/ou exécuter le service de détection ; et
l'établissement, par le dispositif de détection, d'une première session PDU sur la base des premières informations, dans lequel la première session PDU correspond à la session PDU attendue par le premier élément de réseau.

13. Procédé d'établissement de canal de détection selon la revendication 12, dans lequel l'établissement, par le dispositif de détection, d'une première session PDU sur la base des premières informations comprend au moins l'un des éléments suivants :
la sélection, par le dispositif de détection sur la base des premières informations, d'une session PDU qui est conforme aux informations associées à la session PDU attendue par le premier élément de réseau parmi les sessions PDU existantes en tant que première session PDU ; et
la création, par le dispositif de détection sur la base des premières informations, d'une nouvelle session PDU qui est conforme aux informations associées à la session PDU attendue par le premier élément de réseau en tant que première session PDU.

14. Procédé d'établissement de canal de détection, comprenant :
l'envoi, par un second élément de réseau, d'un premier message à un premier élément de réseau, dans lequel le premier message comprend des informations associées à un dispositif de détection ; le premier message est utilisé pour déclencher la transmission de premières informations ; les premières informations sont utilisées pour indiquer, au dispositif de détection, des informations associées à une session PDU attendue par le premier élément de réseau ; le premier élément de réseau comprend un élément de réseau ayant une fonction de fourniture de services de détection ; et la session PDU indiquée par les premières informations est utilisée pour établir une connexion de détection et/ou exécuter le service de détection.

15. Dispositif électronique, comprenant un processeur et une mémoire, dans lequel la mémoire stocke un programme ou des instructions capables de s'exécuter sur le processeur, et le programme ou les instructions, lorsqu'ils sont exécutés par le processeur, mettent en œuvre le procédé d'établissement de canal de détection selon l'une quelconque des revendications 1 à 14.
